# EUROPEAN PATENT APPLICATION

(11) **EP 4 568 153 A1**
(43) Date of publication of application: **11.06.2025**
(21) Application number: 23849311.8
(22) Date of filing: 28.07.2023
(51) Int. Cl.: H04L 5/00

(54) **SIDELINK RESOURCE ALLOCATION METHOD AND APPARATUS IN UNLICENSED SPECTRUM, AND STORAGE MEDIUM**

(30) Priority: 05.08.2022 CN 202210940332
(71) Applicant: Datang Mobile Communications Equipment Co., Ltd., Beijing 100085 (CN)
(72) Inventor: REN, Xiaotao, Beijing 100085 (CN)
(74) Representative: Studio Torta S.p.A.
(86) International application number: PCT/CN2023/109929
(87) International publication number: WO 2024/027603

(57) **Abstract**

The present disclosure provides a sidelink resource allocation method and apparatus in an unauthorized spectrum, and a storage medium. The method includes: sending first indication information to a second device, where the first indication information includes resource allocation information, and the resource allocation information is correlated with an interlace included in a resource pool for a sidelink in the unauthorized spectrum. According to the present disclosure, a reliability of a sidelink resource allocation process in the unauthorized spectrum can be effectively improved based on the first indication information, thereby effectively enhancing a transmission success rate of sidelink data packets.

## Description

### TECHNICAL FIELD

The present disclosure relates to the field of communication technology and, in particular, to a sidelink resource allocation method and apparatus in an unauthorized spectrum, and a storage medium.

### BACKGROUND

Currently, in spectrum resources of the New Radio Access (New Radio Access, NR) technology for the 5th Generation (5th Generation, 5G) mobile communication, authorized spectrum resources available for the vehicle-to-everything (Vehicle-to-Everything, V2X) technology are relatively limited. Therefore, it is necessary to introduce unauthorized spectrums into available spectrums for the 5G sidelink communication. However, usage of the unauthorized spectrum requires compliance with regulatory requirements, that is, requires compliance with the requirement of both occupied channel bandwidth (Occupied Channel Bandwidth, OCB) and power spectral density (Power Spectral Density, PSD).

### SUMMARY

The present disclosure aims to at least partially solve one of the technical problems in related technologies.

Therefore, the purpose of the present disclosure is to provide a sidelink resource allocation method and apparatus in an unauthorized spectrum, and a storage medium, which can effectively improve a reliability of a sidelink resource allocation process in the unauthorized spectrum based on first indication information, thereby effectively enhancing a transmission success rate of sidelink data packets.

A sidelink resource allocation method in an unauthorized spectrum provided by an embodiment of a first aspect of the present disclosure is executed by a first device or a network device, including: sending first indication information to a second device, where the first indication information includes resource allocation information, and the resource allocation information is correlated with an interlace included in a resource pool for a sidelink in the unauthorized spectrum.

In one implementation, the resource pool includes at least one of the following: at least one interlace; at least one resource block set, each resource block set includes at least one interlace; at least one sub-channel, each sub-channel includes at least one interlace; at least one resource block set, each resource block set includes at least one sub-channel, and each sub-channel includes at least one interlace; or at least one sub-channel, each sub-channel includes at least one resource block set, and each resource block set includes at least one interlace.

In one implementation, in a case where the sub-channel includes multiple interlaces, index numbers of the multiple interlaces are consecutive; in a case where the resource block set includes multiple interlaces, index numbers of the multiple interlaces are consecutive; in a case where the first device occupies multiple sub-channels, index numbers of the multiple sub-channels are consecutive; in a case where the first device occupies multiple interlaces, index numbers of the multiple interlaces are consecutive.

In one implementation, a unit for sidelink resource allocation in the unauthorized spectrum is the interlace, and the first device occupies at least one interlace; or the unit for the sidelink resource allocation in the unauthorized spectrum is the sub-channel, and the first device occupies at least one sub-channel.

In one implementation, the first device occupies one interlace, and transmits data within all resource blocks of the occupied interlace.

In one implementation, the first indication information further includes at least one of the following: an index number of a resource block set; an index number of a sub-channel; or an index number of the interlace.

In one implementation, the index number of the resource block set includes at least one of the following: an index number of a starting resource block set; an index number of an ending resource block set; or the number of the resource block set.

In one implementation, the index number of the interlace includes at least one of the following: an index number of a starting interlace; an index number of an ending interlace; or the number of the interlace; where the interlace is globally numbered within the resource pool; and/or locally numbered within the resource block set, and/or locally numbered within the sub-channel.

In one implementation, in the case where the interlace is globally numbered within the resource pool, the index number of the interlace within the resource pool is unique; in the case where the interlace is locally numbered within the resource block set, the index number of the interlace within the resource block set is unique; and in the case where the interlace is locally numbered within the sub-channel, the index number of the interlace within the sub-channel is unique.

In one implementation, the first indication information includes: an index number of the interlace, where the index number of the interlace is used to determine the interlace allocated to the second device; where the resource pool includes multiple interlaces; the second device occupies one interlace; or the second device occupies multiple interlaces, where the index numbers of the multiple interlaces are consecutive; a unit for sidelink resource allocation in the unauthorized spectrum is the interlace.

In one implementation, the first indication information includes: an index number of a resource block set and an index number of the interlace, where the index number of the resource block set and the index number of the interlace are used to determine the interlace allocated to the second device; where the resource pool includes at least one resource block set, each resource block set includes multiple interlaces; the second device occupies one interlace; or the second device occupies multiple interlaces, where the index numbers of the multiple interlaces are consecutive; a unit for sidelink resource allocation in the unauthorized spectrum is the interlace.

In one implementation, the first indication information includes: an index number of the interlace and an index number of a sub-channel, where the index number of the interlace and the index number of the sub-channel are used to determine the interlace allocated to the second device; where the resource pool includes at least one sub-channel, and each sub-channel includes at least one interlace; the second device occupies one interlace or sub-channel; or the second device occupies multiple interlaces or multiple sub-channels, where the index numbers of the multiple interlaces are consecutive, or the index numbers of the multiple sub-channels are consecutive; a unit for sidelink resource allocation in the unauthorized spectrum is the interlace or the sub-channel.

In one implementation, the first indication information includes: an index number of a resource block set, an index number of the interlace and an index number of a sub-channel, where the index number of the resource block set, the index number of the interlace and the index number of the sub-channel are used to determine the interlace allocated to the second device; where the resource pool includes at least one resource block set, each resource block set includes at least one sub-channel, each sub-channel includes at least one interlace; or the resource pool includes at least one sub-channel, each sub-channel includes at least one resource block set, each resource block set includes multiple interlace; the second device occupies one interlace or sub-channel; or the second device occupies multiple interlaces or multiple sub-channels, where the index numbers of the multiple interlaces are consecutive, or the index numbers of the multiple sub-channels are consecutive; a unit for sidelink resource allocation in the unauthorized spectrum is the interlace or the sub-channel.

In one implementation, the sending the first indication information to the second device includes: sending a first message to the second device, where the first message includes the first indication information; where the first message includes at least one of the following: downlink control information DCI; sidelink control information SCI; media access control-control element MAC CE information; a radio resource control RRC message; or a pre-configured message.

In one implementation, the resource pool compliances with at least one of the following: each resource block set occupies 20 megahertz MHz bandwidth; there is a guard band between two adjacent resource block sets; each interlace includes at least 10 resource blocks; in a case where a subcarrier spacing SCS is 15 kHz, each resource block set includes 10 interlaces; in a case where the subcarrier spacing SCS is 30 kHz, each resource block set includes 5 interlaces; or the number of resource block sets included in each sub-channel is an integer.

For the sidelink resource allocation method in the unauthorized spectrums provided by the embodiment of the first aspect of the present disclosure is executed by the first device or the network device, by sending the first indication information to the second device, where the first indication information includes the resource allocation information, and the resource allocation information is correlated with the interface included in the resource pool for the sidelink in the unauthorized spectrum, a reliability of a sidelink resource allocation process in the unauthorized spectrum can be effectively improved based on the first indication information, thereby effectively enhancing a transmission success rate of sidelink data packets.

A sidelink resource allocation method in an unauthorized spectrum provided by an embodiment of a second aspect of the present disclosure is executed by a second device, including: obtaining first indication information sent by a first device, where the first indication information includes resource allocation information, and the resource allocation information is correlated with an interlace included in a resource pool for a sidelink in the unauthorized spectrum; and performing sidelink communication in the resource pool according to the resource allocation information.

In one implementation, the resource pool includes at least one of the following: at least one interlace; at least one resource block set, each resource block set includes at least one interlace; at least one sub-channel, each sub-channel includes at least one interlace; at least one resource block set, each resource block set includes at least one sub-channel, and each sub-channel includes at least one interlace; or at least one sub-channel, each sub-channel includes at least one resource block set, and each resource block set includes at least one interlace.

In one implementation, in a case where the sub-channel includes multiple interlaces, index numbers of the multiple interlaces are consecutive; in a case where the resource block set includes multiple interlaces, index numbers of the multiple interlaces are consecutive; in a case where the second device occupies multiple sub-channels, index numbers of the multiple sub-channels are consecutive; in a case where the second device occupies multiple interlaces, index numbers of the multiple interlaces are consecutive.

In one implementation, a unit for sidelink resource allocation in the unauthorized spectrum is the interlace, and the second device occupies at least one interlace; or the unit for the sidelink resource allocation in the unauthorized spectrum is the sub-channel, and the second device occupies at least one sub-channel.

In one implementation, the second device occupies one interlace, and transmits data within all resource blocks of the occupied interlace.

In one implementation, the first indication information further includes at least one of the following: an index number of a resource block set; an index number of a sub-channel; or an index number of the interlace.

In one implementation, the index number of the resource block set includes at least one of the following: an index number of a starting resource block set; an index number of an ending resource block set; or the number of the resource block set.

In one implementation, the index number of the interlace includes at least one of the following: an index number of a starting interlace; an index number of an ending interlace; or the number of the interlace; where the interlace is globally numbered within the resource pool; and/or locally numbered within the resource block set, and/or locally numbered within the sub-channel.

In one implementation, in the case where the interlace is globally numbered within the resource pool, the index number of the interlace within the resource pool is unique; in the case where the interlace is locally numbered within the resource block set, the index number of the interlace within the resource block set is unique; and in the case where the interlace is locally numbered within the sub-channel, the index number of the interlace within the sub-channel is unique.

In one implementation, the obtaining the first indication information sent by the first device includes: receiving a first message sent by the first device, where the first message includes the first indication information; where the first message includes at least one of the following: downlink control information DCI; sidelink control information SCI; media access control-control element MAC CE information; a radio resource control RRC message; or a pre-configured message.

In one implementation, the obtaining the first indication information sent by the first device includes at least one of the following: obtaining the first indication information sent by a network device, where the first indication information is determined by the network device, and the first device is the network device; or obtaining the first indication information sent by a terminal device, where the first indication information is determined by the network device or the terminal device, and the first device is the terminal device.

In one implementation, the performing the sidelink communication in the resource pool according to the resource allocation information includes: determining the interlace allocated to the second device according to the resource allocation information; and performing the sidelink communication based on the resource block of the allocated interlace.

In one implementation, the resource pool compliances with at least one of the following: each resource block set occupies 20 megahertz MHz bandwidth; there is a guard band between two adjacent resource block sets; each interlace includes at least 10 resource blocks; in a case where a subcarrier spacing SCS is 15 kHz, each resource block set includes 10 interlaces; in a case where the subcarrier spacing SCS is 30 kHz, each resource block set includes 5 interlaces; or the number of resource block sets included in each sub-channel is an integer.

For the sidelink resource allocation method in the unauthorized spectrum provided by the embodiment of the second aspect of the present disclosure is executed by the second device, by obtaining the first indication information sent by the first device, where the first indication information includes the resource allocation information, and the resource allocation information is correlated with the interlace included in the resource pool for the sidelink in the unauthorized spectrum, and performing the sidelink communication in the resource pool according to the resource allocation information, a reliability of a resource allocation process can be effectively improved based on the first indication information, thereby effectively enhancing communication effect of the sidelink.

A sidelink resource allocation apparatus in an unauthorized spectrum provided by an embodiment of a third aspect of the present disclosure includes: a sending unit, configured to send first indication information to a second device, where the first indication information includes resource allocation information, and the resource allocation information is correlated with an interlace included in a resource pool for a sidelink in the unauthorized spectrum.

In one implementation, the resource pool includes at least one of the following: at least one interlace; at least one resource block set, each resource block set includes at least one interlace; at least one sub-channel, each sub-channel includes at least one interlace; at least one resource block set, each resource block set includes at least one sub-channel, and each sub-channel includes at least one interlace; or at least one sub-channel, each sub-channel includes at least one resource block set, and each resource block set includes at least one interlace.

In one implementation, in a case where the sub-channel includes multiple interlaces, index numbers of the multiple interlaces are consecutive; in a case where the resource block set includes multiple interlaces, index numbers of the multiple interlaces are consecutive; in a case where the first device occupies multiple sub-channels, index numbers of the multiple sub-channels are consecutive; in a case where the first device occupies multiple interlaces, index numbers of the multiple interlaces are consecutive.

In one implementation, a unit for sidelink resource allocation in the unauthorized spectrum is the interlace, and the first device occupies at least one interlace; or the unit for the sidelink resource allocation in the unauthorized spectrum is the sub-channel, and the first device occupies at least one sub-channel.

In one implementation, the first device occupies one interlace, and transmits data within all resource blocks of the occupied interlace.

In one implementation, the first indication information further includes at least one of the following: an index number of a resource block set; an index number of a sub-channel; or an index number of the interlace.

In one implementation, the index number of the resource block set includes at least one of the following: an index number of a starting resource block set; an index number of an ending resource block set; or the number of the resource block set.

In one implementation, the index number of the interlace includes at least one of the following: an index number of a starting interlace; an index number of an ending interlace; or the number of the interlace; where the interlace is globally numbered within the resource pool; and/or locally numbered within the resource block set, and/or locally numbered within the sub-channel.

In one implementation, in the case where the interlace is globally numbered within the resource pool, the index number of the interlace within the resource pool is unique; in the case where the interlace is locally numbered within the resource block set, the index number of the interlace within the resource block set is unique; and in the case where the interlace is locally numbered within the sub-channel, the index number of the interlace within the sub-channel is unique.

In one implementation, the first indication information includes: an index number of the interlace, where the index number of the interlace is used to determine the interlace allocated to the second device; where the resource pool includes multiple interlaces; the second device occupies one interlace; or the second device occupies multiple interlaces, where the index numbers of the multiple interlaces are consecutive; a unit for sidelink resource allocation in the unauthorized spectrum is the interlace.

In one implementation, the first indication information includes: an index number of a resource block set and an index number of the interlace, where the index number of the resource block set and the index number of the interlace are used to determine the interlace allocated to the second device; where the resource pool includes at least one resource block set, each resource block set includes multiple interlaces; the second device occupies one interlace; or the second device occupies multiple interlaces, where the index numbers of the multiple interlaces are consecutive; a unit for sidelink resource allocation in the unauthorized spectrum is the interlace.

In one implementation, the first indication information includes: an index number of the interlace and an index number of a sub-channel, where the index number of the interlace and the index number of the sub-channel are used to determine the interlace allocated to the second device; where the resource pool includes at least one sub-channel, and each sub-channel includes at least one interlace; the second device occupies one interlace or sub-channel; or the second device occupies multiple interlaces or multiple sub-channels, where the index numbers of the multiple interlaces are consecutive, or the index numbers of the multiple sub-channels are consecutive; a unit for sidelink resource allocation in the unauthorized spectrum is the interlace or the sub-channel.

In one implementation, the first indication information includes: an index number of a resource block set, an index number of the interlace and an index number of a sub-channel, where the index number of the resource block set, the index number of the interlace and the index number of the sub-channel are used to determine the interlace allocated to the second device; where the resource pool includes at least one resource block set, each resource block set includes at least one sub-channel, each sub-channel includes at least one interlace; or the resource pool includes at least one sub-channel, each sub-channel includes at least one resource block set, each resource block set includes multiple interlace; the second device occupies one interlace or sub-channel; or the second device occupies multiple interlaces or multiple sub-channels, where the index numbers of the multiple interlaces are consecutive, or the index numbers of the multiple sub-channels are consecutive; a unit for sidelink resource allocation in the unauthorized spectrum is the interlace or the sub-channel.

In one implementation, the sending unit is specifically configured to: send a first message to the second device, where the first message includes the first indication information; where the first message includes at least one of the following: downlink control information DCI; sidelink control information SCI; media access control-control element MAC CE information; a radio resource control RRC message; or a pre-configured message.

In one implementation, the resource pool compliances with at least one of the following: each resource block set occupies 20 megahertz MHz bandwidth; there is a guard band between two adjacent resource block sets; each interlace includes at least 10 resource blocks; in a case where a subcarrier spacing SCS is 15 kHz, each resource block set includes 10 interlaces; in a case where the subcarrier spacing SCS is 30 kHz, each resource block set includes 5 interlaces; or the number of resource block sets included in each sub-channel is an integer.

For the sidelink resource allocation apparatus in the unauthorized spectrum provided by the embodiment of the third aspect of the present disclosure, by sending the first indication information to the second device, where the first indication information includes the resource allocation information, and the resource allocation information is correlated with the interface included in the resource pool for the sidelink in the unauthorized spectrum, a reliability of a sidelink resource allocation process in the unauthorized spectrum can be effectively improved based on the first indication information, thereby effectively enhancing a transmission success rate of sidelink data packets.

A sidelink resource allocation apparatus in an unauthorized spectrum provided by an embodiment of a fourth aspect of the present disclosure includes: an obtaining unit, configured to obtain first indication information sent by a first device, where the first indication information includes resource allocation information, and the resource allocation information is correlated with an interlace included in a resource pool for a sidelink in the unauthorized spectrum; and a processing unit, configured to perform sidelink communication in the resource pool according to the resource allocation information.

In one implementation, the resource pool includes at least one of the following: at least one interlace; at least one resource block set, each resource block set includes at least one interlace; at least one sub-channel, each sub-channel includes at least one interlace; at least one resource block set, each resource block set includes at least one sub-channel, and each sub-channel includes at least one interlace; or at least one sub-channel, each sub-channel includes at least one resource block set, and each resource block set includes at least one interlace.

In one implementation, in a case where the sub-channel includes multiple interlaces, index numbers of the multiple interlaces are consecutive; in a case where the resource block set includes multiple interlaces, index numbers of the multiple interlaces are consecutive; in a case where the second device occupies multiple sub-channels, index numbers of the multiple sub-channels are consecutive; in a case where the second device occupies multiple interlaces, index numbers of the multiple interlaces are consecutive.

In one implementation, a unit for sidelink resource allocation in the unauthorized spectrum is the interlace, and the second device occupies at least one interlace; or the unit for the sidelink resource allocation in the unauthorized spectrum is the sub-channel, and the second device occupies at least one sub-channel.

In one implementation, the second device occupies one interlace, and transmits data within all resource blocks of the occupied interlace.

In one implementation, the first indication information further includes at least one of the following: an index number of a resource block set; an index number of a sub-channel; or an index number of the interlace.

In one implementation, the index number of the resource block set includes at least one of the following: an index number of a starting resource block set; an index number of an ending resource block set; or the number of the resource block set.

In one implementation, the index number of the interlace includes at least one of the following: an index number of a starting interlace; an index number of an ending interlace; or the number of the interlace; where the interlace is globally numbered within the resource pool; and/or locally numbered within the resource block set, and/or locally numbered within the sub-channel.

In one implementation, in the case where the interlace is globally numbered within the resource pool, the index number of the interlace within the resource pool is unique; in the case where the interlace is locally numbered within the resource block set, the index number of the interlace within the resource block set is unique; and in the case where the interlace is locally numbered within the sub-channel, the index number of the interlace within the sub-channel is unique.

In one implementation, the obtaining unit is specifically configured to: receive a first message sent by the first device, where the first message includes the first indication information; where the first message includes at least one of the following: downlink control information DCI; sidelink control information SCI; media access control-control element MAC CE information; a radio resource control RRC message; or a pre-configured message.

In one implementation, the obtaining unit is specifically configured to: obtain the first indication information sent by a network device, where the first indication information is determined by the network device, and the first device is the network device; and obtain the first indication information sent by a terminal device, where the first indication information is determined by the network device or the terminal device, and the first device is the terminal device.

In one implementation, the processing unit is specifically configured to: determine the interlace allocated to the second device according to the resource allocation information; and perform the sidelink communication based on the resource block of the allocated interlace.

In one implementation, the resource pool compliances with at least one of the following: each resource block set occupies 20 megahertz MHz bandwidth; there is a guard band between two adjacent resource block sets; each interlace includes at least 10 resource blocks; in a case where a subcarrier spacing SCS is 15 kHz, each resource block set includes 10 interlaces; in a case where the subcarrier spacing SCS is 30 kHz, each resource block set includes 5 interlaces; or the number of resource block sets included in each sub-channel is an integer.

For the sidelink resource allocation apparatus in the unauthorized spectrum provided by the embodiment of the fourth aspect of the present disclosure, by obtaining the first indication information sent by the first device, where the first indication information includes the resource allocation information, and the resource allocation information is correlated with the interlace included in the resource pool for the sidelink in the unauthorized spectrum, and performing the sidelink communication in the resource pool according to the resource allocation information, a reliability of a resource allocation process can be effectively improved based on the first indication information, thereby effectively enhancing communication effect of the sidelink.

A sidelink resource allocation apparatus in an unauthorized spectrum provided by an embodiment of a fifth aspect of the present disclosure includes: a memory, a transceiver and a processor: the memory is configured to store computer programs; the transceiver is configured to transmit and receive data under control of the processor; the processor is configured to read the computer programs in the memory and perform the following operations: sending first indication information to a second device, where the first indication information includes resource allocation information, and the resource allocation information is correlated with an interlace included in a resource pool for a sidelink in the unauthorized spectrum.

In one implementation, the resource pool includes at least one of the following: at least one interlace; at least one resource block set, each resource block set includes at least one interlace; at least one sub-channel, each sub-channel includes at least one interlace; at least one resource block set, each resource block set includes at least one sub-channel, and each sub-channel includes at least one interlace; or at least one sub-channel, each sub-channel includes at least one resource block set, and each resource block set includes at least one interlace.

In one implementation, in a case where the sub-channel includes multiple interlaces, index numbers of the multiple interlaces are consecutive; in a case where the resource block set includes multiple interlaces, index numbers of the multiple interlaces are consecutive; in a case where the first device occupies multiple sub-channels, index numbers of the multiple sub-channels are consecutive; in a case where the first device occupies multiple interlaces, index numbers of the multiple interlaces are consecutive.

In one implementation, a unit for sidelink resource allocation in the unauthorized spectrum is the interlace, and the first device occupies at least one interlace; or the unit for the sidelink resource allocation in the unauthorized spectrum is the sub-channel, and the first device occupies at least one sub-channel.

In one implementation, the first device occupies one interlace, and transmits data within all resource blocks of the occupied interlace.

In one implementation, the first indication information further includes at least one of the following: an index number of a resource block set; an index number of a sub-channel; or an index number of the interlace.

In one implementation, the index number of the resource block set includes at least one of the following: an index number of a starting resource block set; an index number of an ending resource block set; or the number of the resource block set.

In one implementation, the index number of the interlace includes at least one of the following: an index number of a starting interlace; an index number of an ending interlace; or the number of the interlace; where the interlace is globally numbered within the resource pool; and/or locally numbered within the resource block set, and/or locally numbered within the sub-channel.

In one implementation, in the case where the interlace is globally numbered within the resource pool, the index number of the interlace within the resource pool is unique; in the case where the interlace is locally numbered within the resource block set, the index number of the interlace within the resource block set is unique; and in the case where the interlace is locally numbered within the sub-channel, the index number of the interlace within the sub-channel is unique.

In one implementation, the first indication information includes: an index number of the interlace, where the index number of the interlace is used to determine the interlace allocated to the second device; where the resource pool includes multiple interlaces; the second device occupies one interlace; or the second device occupies multiple interlaces, where the index numbers of the multiple interlaces are consecutive; a unit for sidelink resource allocation in the unauthorized spectrum is the interlace.

In one implementation, the first indication information includes: an index number of a resource block set and an index number of the interlace, where the index number of the resource block set and the index number of the interlace are used to determine the interlace allocated to the second device; where the resource pool includes at least one resource block set, each resource block set includes multiple interlaces; the second device occupies one interlace; or the second device occupies multiple interlaces, where the index numbers of the multiple interlaces are consecutive; a unit for sidelink resource allocation in the unauthorized spectrum is the interlace.

In one implementation, the first indication information includes: an index number of the interlace and an index number of a sub-channel, where the index number of the interlace and the index number of the sub-channel are used to determine the interlace allocated to the second device; where the resource pool includes at least one sub-channel, and each sub-channel includes at least one interlace; the second device occupies one interlace or sub-channel; or the second device occupies multiple interlaces or multiple sub-channels, where the index numbers of the multiple interlaces are consecutive, or the index numbers of the multiple sub-channels are consecutive; a unit for sidelink resource allocation in the unauthorized spectrum is the interlace or the sub-channel.

In one implementation, the first indication information includes: an index number of a resource block set, an index number of the interlace and an index number of a sub-channel, where the index number of the resource block set, the index number of the interlace and the index number of the sub-channel are used to determine the interlace allocated to the second device; where the resource pool includes at least one resource block set, each resource block set includes at least one sub-channel, each sub-channel includes at least one interlace; or the resource pool includes at least one sub-channel, each sub-channel includes at least one resource block set, each resource block set includes multiple interlace; the second device occupies one interlace or sub-channel; or the second device occupies multiple interlaces or multiple sub-channels, where the index numbers of the multiple interlaces are consecutive, or the index numbers of the multiple sub-channels are consecutive; a unit for sidelink resource allocation in the unauthorized spectrum is the interlace or the sub-channel.

In one implementation, the processor is specifically configured to: send a first message to the second device, where the first message includes the first indication information; where the first message includes at least one of the following: downlink control information DCI; sidelink control information SCI; media access control-control element MAC CE information; a radio resource control RRC message; or a pre-configured message.

In one implementation, the resource pool compliances with at least one of the following: each resource block set occupies 20 megahertz MHz bandwidth; there is a guard band between two adjacent resource block sets; each interlace includes at least 10 resource blocks; in a case where a subcarrier spacing SCS is 15 kHz, each resource block set includes 10 interlaces; in a case where the subcarrier spacing SCS is 30 kHz, each resource block set includes 5 interlaces; or the number of resource block sets included in each sub-channel is an integer.

For the sidelink resource allocation apparatus in the unauthorized spectrum provided by the embodiment of the fifth aspect of the present disclosure, by sending the first indication information to the second device, where the first indication information includes the resource allocation information, and the resource allocation information is correlated with the interface included in the resource pool for the sidelink in the unauthorized spectrum, a reliability of a sidelink resource allocation process in the unauthorized spectrum can be effectively improved based on the first indication information, thereby effectively enhancing a transmission success rate of sidelink data packets.

A sidelink resource allocation apparatus in an unauthorized spectrum provided by an embodiment of a sixth aspect of the present disclosure includes: a memory, a transceiver and a processor: the memory is configured to store computer programs; the transceiver is configured to transmit and receive data under control of the processor; the processor is configured to read the computer programs in the memory and perform the following operations: obtaining first indication information sent by a first device, where the first indication information includes resource allocation information, and the resource allocation information is correlated with an interlace included in a resource pool for a sidelink in the unauthorized spectrum; and performing sidelink communication in the resource pool according to the resource allocation information.

In one implementation, the resource pool includes at least one of the following: at least one interlace; at least one resource block set, each resource block set includes at least one interlace; at least one sub-channel, each sub-channel includes at least one interlace; at least one resource block set, each resource block set includes at least one sub-channel, and each sub-channel includes at least one interlace; or at least one sub-channel, each sub-channel includes at least one resource block set, and each resource block set includes at least one interlace.

In one implementation, in a case where the sub-channel includes multiple interlaces, index numbers of the multiple interlaces are consecutive; in a case where the resource block set includes multiple interlaces, index numbers of the multiple interlaces are consecutive; in a case where the second device occupies multiple sub-channels, index numbers of the multiple sub-channels are consecutive; in a case where the second device occupies multiple interlaces, index numbers of the multiple interlaces are consecutive.

In one implementation, a unit for sidelink resource allocation in the unauthorized spectrum is the interlace, and the second device occupies at least one interlace; or the unit for the sidelink resource allocation in the unauthorized spectrum is the sub-channel, and the second device occupies at least one sub-channel.

In one implementation, the second device occupies one interlace, and transmits data within all resource blocks of the occupied interlace.

In one implementation, the first indication information further includes at least one of the following: an index number of a resource block set; an index number of a sub-channel; or an index number of the interlace.

In one implementation, the index number of the resource block set includes at least one of the following: an index number of a starting resource block set; an index number of an ending resource block set; or the number of the resource block set.

In one implementation, the index number of the interlace includes at least one of the following: an index number of a starting interlace; an index number of an ending interlace; or the number of the interlace; where the interlace is globally numbered within the resource pool; and/or locally numbered within the resource block set, and/or locally numbered within the sub-channel.

In one implementation, in the case where the interlace is globally numbered within the resource pool, the index number of the interlace within the resource pool is unique; in the case where the interlace is locally numbered within the resource block set, the index number of the interlace within the resource block set is unique; and in the case where the interlace is locally numbered within the sub-channel, the index number of the interlace within the sub-channel is unique.

In one implementation, the processor is specifically configured to: receive a first message sent by the first device, where the first message includes the first indication information; where the first message includes at least one of the following: downlink control information DCI; sidelink control information SCI; media access control-control element MAC CE information; a radio resource control RRC message; or a pre-configured message.

In one implementation, the processor is specifically configured to: obtain the first indication information sent by a network device, where the first indication information is determined by the network device, and the first device is the network device; and obtain the first indication information sent by a terminal device, where the first indication information is determined by the network device or the terminal device, and the first device is the terminal device.

In one implementation, the processor is specifically configured to: determine the interlace allocated to the second device according to the resource allocation information; and perform the sidelink communication based on the resource block of the allocated interlace.

In one implementation, the resource pool compliances with at least one of the following: each resource block set occupies 20 megahertz MHz bandwidth; there is a guard band between two adjacent resource block sets; each interlace includes at least 10 resource blocks; in a case where a subcarrier spacing SCS is 15 kHz, each resource block set includes 10 interlaces; in a case where the subcarrier spacing SCS is 30 kHz, each resource block set includes 5 interlaces; or the number of resource block sets included in each sub-channel is an integer.

For the sidelink resource allocation apparatus in the unauthorized spectrum provided by the embodiment of the sixth aspect of the present disclosure, by obtaining the first indication information sent by the first device, where the first indication information includes the resource allocation information, and the resource allocation information is correlated with the interlace included in the resource pool for the sidelink in the unauthorized spectrum, and performing the sidelink communication in the resource pool according to the resource allocation information, a reliability of a resource allocation process can be effectively improved based on the first indication information, thereby effectively enhancing communication effect of the sidelink.

A processor readable storage medium provided by an embodiment of a seventh aspect of the present disclosure stores a computer program, and the computer program is used to enable the processor to execute the sidelink resource allocation method in the unauthorized spectrum provided by the embodiment of the first aspect of the present disclosure.

For the processor readable storage medium provided by the embodiment of the seventh aspect of the present disclosure, by sending the first indication information to the second device, where the first indication information includes the resource allocation information, and the resource allocation information is correlated with the interface included in the resource pool for the sidelink in the unauthorized spectrum, a reliability of a sidelink resource allocation process in the unauthorized spectrum can be effectively improved based on the first indication information, thereby effectively enhancing a transmission success rate of sidelink data packets.

A processor readable storage medium provided by an embodiment of an eighth aspect of the present disclosure stores a computer program, and the computer program is used to enable the processor to execute the sidelink resource allocation method resources in the unauthorized spectrum provided by the embodiment of the second aspect of the present disclosure.

For the processor readable storage medium provided by the embodiment of the eighth aspect of the present disclosure, by obtaining the first indication information sent by the first device, where the first indication information includes the resource allocation information, and the resource allocation information is correlated with the interlace included in the resource pool for the sidelink in the unauthorized spectrum, and performing the sidelink communication in the resource pool according to the resource allocation information, a reliability of a resource allocation process can be effectively improved based on the first indication information, thereby effectively enhancing communication effect of the sidelink.

A computer program product is provided by an embodiment of a ninth aspect of the present disclosure, including a computer program, where the computer program, when executed by a processor, implements the sidelink resource allocation method in the unauthorized spectrum provided by the embodiment of the first aspect of the present application or implements the sidelink resource allocation method in the unauthorized spectrum provided by the embodiment of the second aspect of the present disclosure.

Additional aspects and advantages of the present disclosure will be partially presented in the following description, some of which will become apparent from the following description, or learned through practice of the present disclosure.

### BRIEF DESCRIPTION OF DRAWINGS

The above and/or additional aspects and advantages of the present disclosure will become apparent and easily understood from the following description of embodiments in conjunction with accompanying drawings.
FIG. 1 is a flowchart of a sidelink resource allocation method in an unauthorized spectrum provided by an embodiment of the present disclosure.
FIG. 2a is a transmission schematic diagram of first indication information provided by an embodiment of the present disclosure.
FIG. 2b is another transmission schematic diagram of first indication information provided by an embodiment of the present disclosure.
FIG. 2c is yet another transmission schematic diagram of first indication information provided by an embodiment of the present disclosure.
FIG. 3a is a schematic diagram of an interlace numbering method provided by an embodiment of the present disclosure.
FIG. 3b is a schematic diagram of another interlace numbering method provided by an embodiment of the present disclosure.
FIG. 4 is a schematic diagram of a resource pool provided by an embodiment of the present disclosure.
FIG. 5 is a schematic diagram of another resource pool provided by an embodiment of the present disclosure.
FIG. 6 is a schematic diagram of another resource pool provided by an embodiment of the present disclosure.
FIG. 7 is a schematic diagram of another resource pool provided by an embodiment of the present disclosure.
FIG. 8 is a flowchart of a sidelink resource allocation method in an unauthorized spectrum provided by another embodiment of the present disclosure.
FIG. 9 is a flowchart of a sidelink resource allocation method in an unauthorized spectrum provided by another embodiment of the present disclosure.
FIG. 10 is a flowchart of yet another sidelink resource allocation method in an unauthorized spectrum provided by an embodiment of the present disclosure.
FIG. 11 is a flowchart of yet another sidelink resource allocation method in an unauthorized spectrum provided by an embodiment of the present disclosure.
FIG. 12 is a flowchart of yet another sidelink resource allocation method in an unauthorized spectrum provided by an embodiment of the present disclosure.
FIG. 13 is a structural schematic diagram of a sidelink resource allocation apparatus in an unauthorized spectrum provided by an embodiment of the present disclosure.
FIG. 14 is a structural schematic diagram of yet another sidelink resource allocation apparatus in an unauthorized spectrum provided by an embodiment of the present disclosure.
FIG. 15 is a structural schematic diagram of another sidelink resource allocation apparatus in an unauthorized spectrum provided by yet another embodiment of the present disclosure.
FIG. 16 is a structural schematic diagram of yet another sidelink resource allocation apparatus in an unauthorized spectrum provided by still another embodiment of the present disclosure.

### DESCRIPTION OF EMBODIMENTS

A term "and/or" in the present disclosure describes an association relationship between related objects, indicating that there can be three types of relationships. For example, A and/or B, can represent: A exists alone, A and B exist simultaneously, and B exists alone. A character "/" generally indicates that objects related back and forth are in an "or" relationship.

The term "multiple" in an embodiment of the present disclosure refers to being two or more objects, similar to other quantifiers.

The following will provide a clear and complete description of technical solutions in embodiments of the present disclosure in conjunction with accompanying drawings in the embodiments of the present disclosure. Obviously, the described embodiments are only a part of the disclosed embodiments and not all of them. Based on the embodiments disclosed in the present disclosure, all other embodiments obtained by ordinary skilled persons in the art without paying creative labor are within a protection scope of the present disclosure.

The present disclosure aims to solve the technical problem that, in related technologies, an allocation process corresponding to communication resources in a sidelink has low reliability, which may not meet OCB regulatory requirements in the frequency domain, thereby affecting a transmission success rate of sidelink data packets. The present disclosure provides a sidelink resource allocation method in an unauthorized spectrum, by sending first indication information to a second device, where the first indication information includes resource allocation information, and the resource allocation information is correlated with an interface included in a resource pool for a sidelink in the unauthorized spectrum, a reliability of a sidelink resource allocation process in the unauthorized spectrum can be effectively improved based on the first indication information, thereby effectively enhancing a transmission success rate of sidelink data packets.

The technical solution provided by the embodiments of the present disclosure can be applied to various systems, especially 5G systems. For example, an applicable system may include a global system of mobile communication (Global System of Mobile Communication, GSM), a code division multiple access (Code Division Multiple Access, CDMA) system, a wideband code division multiple access (Wideband Code Division Multiple Access, WCDMA) general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a long term evolution advanced (Long Term Evolution Advanced, LTE-A) system, a universal mobile telecommunications system (Universal Mobile Telecommunications system, UMTS), a worldwide interoperability for microwave access (Worldwide Interoperability for Microwave Access, WiMAX) system, a 5G New Radio, an NR system and the like. All of these systems include terminal devices and network devices. The system can also include core network parts, such as an evolved packet system (Evolved Packet System, EPS), a 5G system (5GS) and the like.

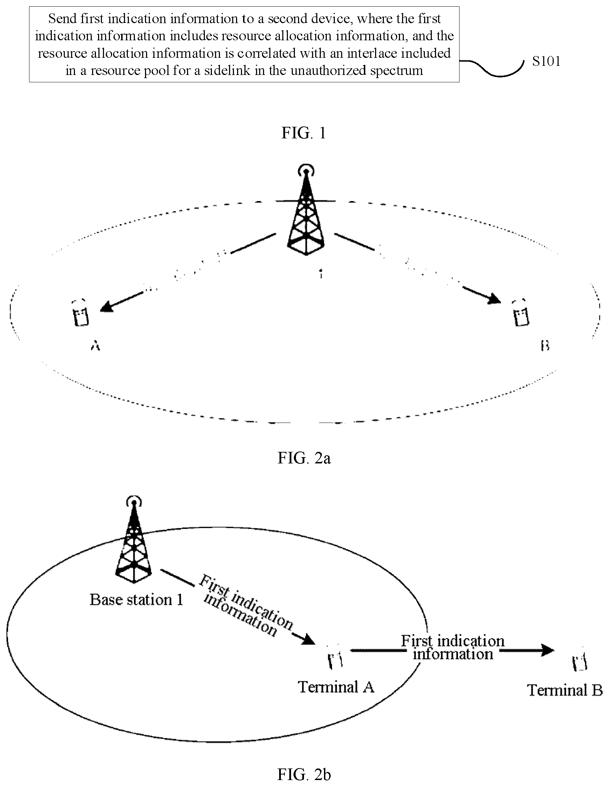

FIG. 1 is a flowchart of a sidelink resource allocation method in an unauthorized spectrum provided by an embodiment of the present disclosure.

It should be noted that an executive entity of the sidelink resource allocation method in the unauthorized spectrum in this embodiment is a sidelink resource allocation apparatus in the unauthorized spectrum, which can be implemented by software and/or hardware and configured in a terminal device, where the terminal device refers to a communication device that can be used to forward and receive digital signals, and the terminal device can send signals to a network device through channels.

The terminal device involved in the embodiments of the present disclosure may refer to a device that provides voice and/or data connectivity to a user, a handheld device with wireless connection capabilities, or other processing devices connected to a wireless modem. In different systems, names of the terminal device may also vary.

For example, in the 5G systems, the terminal device can be referred to as a user equipment (User Equipment, UE). A wireless terminal device can communicate with one or more core networks (Core Network, CN) via a radio access network (Radio Access Network, RAN), and can be a mobile terminal device such as a mobile phone (also known as a "cellular" phones) and a computer with a mobile terminal device, such as portable, pocket sized, handheld, computer built-in, or vehicle mounted mobile devices that exchange language and/or data with the radio access network.

For example, devices such as personal communication service (Personal Communication Service, PCS) phones, cordless phones, session initiation protocol (Session Initiation Protocol, SIP) phones, wireless local loop (Wireless Local Loop, WLL) stations, personal digital assistants (Personal Digital Assistant, PDA), and the like. Wireless terminal devices can also be referred to as systems, subscriber units (subscriber units), subscriber stations (subscriber stations), mobile stations (mobile stations), mobiles (mobiles), remote stations (remote stations), access points (access points), remote terminals (remote terminals), access terminals (access terminals), user terminals (user terminals), user agents (user agents), or user devices (user devices), which are not limited in the embodiments of the present disclosure.

The network device can be used to exchange received air frames with Internet Protocol (Internet Protocol, IP) packets, acting as a router between the wireless terminal device and the rest of the access network, which may include an IP communication network. And the network device can also coordinate attribute managements of air interfaces.

For example, the network device involved in an embodiment of the present disclosure may be a base transceiver station (Base Transceiver Station, BTS) in the Global System for Mobile Communications (Global System for Mobile Communications, GSMs) or Code Division Multiple Access (Code Division Multiple Access, CDMA), a NodeB (NodeB) in the Wide-band Code Division Multiple Access (Wide-band Code Division Multiple Access, WCDMA), an evolutional node B (evolutional node B, eNB or e-NodeB) in the long term evolution (long term evolution, LTE) system, a 5G base station (gNB) in a 5G network architecture (next generation system), or a home evolved node B (Home evolved Node B, HeNBs), a relay node (relay node), a femto (femto), a pico (pico) and the like, which are not limited in the embodiments of the present disclosure. In some network architectures, the network device may include a centralized unit (centralized unit, CU) node and a distributed unit (distributed unit, DU) node, which can also be geographically separated.

The network device and the terminal device can each use one or more antennas for a multi input multi output (Multi Input Multi Output, MIMO) transmission, which can be a single user MIMO (Single User MIMO, SU-MIMO) or a multiple user MIMO (Multiple User MIMO, MU-MIMO). Depending on the form and number of antenna combinations, the MIMO transmission can be a 2D-MIMO, a 3D-MIMO, an FD-MIMO, or a massive MIMO, as well as a diversity transmission, a precoding transmission, a beamforming transmission and the like.

As shown in FIG. 1, the sidelink resource allocation method in the unauthorized spectrum includes step S101.

The embodiment of the present disclosure applies a first device or a network device.

S101: send first indication information to a second device, where the first indication information includes resource allocation information, and the resource allocation information is correlated with an interlace included in a resource pool for a sidelink in the unauthorized spectrum.

The second device can refer to a terminal device in which sidelink communication is to be executed, such as a smartphone, a phone watch, and the like.

The first indication information can be used to indicate a sidelink resource allocation process of the second device in the unauthorized spectrum.

It can be understood that in the field of wireless signals, spectrum is a carrier of signals, and transmission of the signals requires the spectrum. The spectrum can be divided into unauthorized spectrum and authorized spectrum, and there is no difference in technology and functional implementation between the unauthorized spectrum and the authorized spectrum. The authorized spectrum is a frequency band that has been allocated for dedicated use by a certain enterprise or institution and is not open to the public, and the unauthorized spectrum is mostly frequency bands that can be publicly used, such as those used by the wireless networks. While cellular networks use an authorized frequency band, with a frequency range of 1940MHz-1955MHz (uplink) and 2130MHz-2145MHz (downlink). That is to say, the spectrum within this uplink and downlink frequency range does not allow usage of signals of other standards.

In related art, it is usually a base station that centrally schedules time-frequency resources used between terminals in the sidelink communication, or the terminal autonomously selects the time-frequency resources used between terminals in the sidelink communication without the participation of the base station. In this way, a reliability of an allocation process for communication resources in the sidelink is relatively low, and it may not meet the OCB regulatory requirements in the frequency domain, thereby affecting a transmission success rate of sidelink data packets.

A link refers to a passive point-to-point physical connection. In wired communication, the link refers to a physical line between two nodes, such as a cable or fiber optic cable. In wireless communication, the link refers to a path space through which electromagnetic waves propagate between the base station and the terminal. While the sidelink (Sidelink), also known as a device to device communication (Device to Device Communication) technology, is a branch of a cellular Internet of Things technology.

The resource pool refers to a sidelink resource set in the unauthorized spectrum. The interlace refers to a set/combination of resource blocks (Resource Blocks, RBs) or sub-channels with certain intervals in the resource pool. The resource pool can include multiple such set, and different sets can be allocated to different terminals, to enable these terminals to perform data transmission during different communication time periods. The resource allocation information refers to relevant information about the resource allocation process in the resource pool.

In this embodiment, by sending the first indication information to the second device, where the first indication information includes the resource allocation information, and the resource allocation information is correlated with the interface included in the resource pool for the sidelink in the unauthorized spectrum, a reliability of a sidelink resource allocation process in the unauthorized spectrum can be effectively improved based on the first indication information, thereby effectively enhancing a transmission success rate of sidelink data packets.

For example, assuming the network device is Base station 1, the first device is Terminal A, and the second device is Terminal B, the first indication information includes indication information correlated with the interlace in the resource pool for the sidelink. Terminal B performs the sidelink communication in the resource pool in the unauthorized spectrum according to the first indication information.

As shown in FIG. 2a, which is a transmission schematic diagram of first indication information provided by an embodiment of the present disclosure, when Terminal A and Terminal B are within a coverage, Base station 1 determines the first indication information, and then Base station 1 sends the first indication information to Terminal A and Terminal B.

As shown in FIG. 2b, which is another transmission schematic diagram of first indication information provided by an embodiment of the present disclosure, when Terminal A is within the coverage and Terminal B is outside the coverage, Base station 1 or Terminal A determines the first indication information, and then Terminal A uses a sidelink to send the first indication information to Terminal B, so that Terminal B obtains the first indication information.

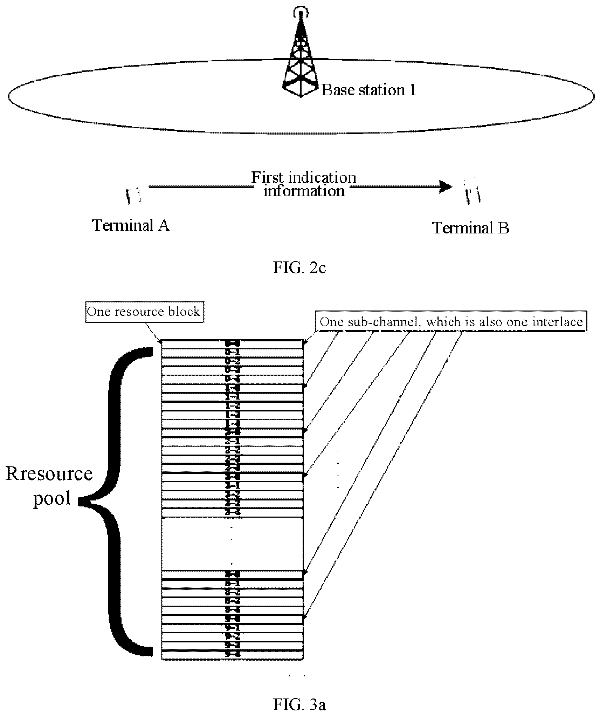

As shown in FIG. 2c, which is yet another transmission schematic diagram of first indication information provided by an embodiment of the present disclosure, when both Terminal A and Terminal B are outside the coverage, after Terminal A determines the first indication information, Terminal A uses the sidelink to send the first indication information to Terminal B.

By using this transmission method of the first indication information, Terminal B can obtain the resource allocation information of the sidelink communication in the resource pool of the unauthorized spectrum, so that Terminal B can determine the sidelink communication resources and complete the sidelink communication according to the first indication information, thereby meeting the regulatory requirements in an unauthorized spectrum access and improving the transmission success rate of the sidelink data packet.

An embodiment of the present disclosure also provides a sidelink resource allocation method in an unauthorized spectrum, where the resource pool includes at least one of the following: at least one interlace; at least one resource block set, each resource block set includes at least one interlace; at least one sub-channel, each sub-channel includes at least one interlace; at least one resource block set, each resource block set includes at least one sub-channel, and each sub-channel includes at least one interlace; or at least one sub-channel, each sub-channel includes at least one resource block set, and each resource block set includes at least one interlace. Thus, a flexibility of the resource pool can be effectively enhanced to suit personalized application scenarios.

It can be understood that in a time domain, the minimum resource granularity is one orthogonal frequency division multiplexing (Orthogonal Frequency Division Multiplexing, OFDM) symbol; and in a frequency domain, the minimum granularity is one subcarrier. One OFDM symbol and one subcarrier form a time-frequency resource unit (resource element), and a physical layer uses the resource element as a basic unit when mapping resources. One resource block (Resource Block, RB) is composed of all OFDM symbols within a time slot and 12 subcarriers in the frequency domain. The resource block set refers to a set composed of resource blocks.

The sub-channel refers to a unit for sidelink resource allocation in frequency domain. One sub-channel occupies consecutive resource blocks (RBs), and the specific number of the RBs can be configured, for example, the minimum can be 10 RBs and the maximum can be 100 RBs.

An embodiment of the present disclosure also provides a sidelink resource allocation method in an unauthorized spectrum, where in a case where the sub-channel includes multiple interlaces, index numbers of the multiple interlaces are consecutive; in a case where the resource block set includes multiple interlaces, index numbers of the multiple interlaces are consecutive; in a case where the first device occupies multiple sub-channels, index numbers of the multiple sub-channels are consecutive; in a case where the first device occupies multiple interlaces, index numbers of the multiple interlaces are consecutive. Thus, a reliability of a process of determining the corresponding interlace or sub-channel based on the index number can be effectively improved, and resource allocation efficiency is also improved.

The index number can be used to indicate location information of an indexed object, which is convenient for a quick search.

An embodiment of the present disclosure also provides a sidelink resource allocation method in an unauthorized spectrum, where a unit for sidelink resource allocation in the unauthorized spectrum is the interlace, and the first device occupies at least one interlace; or the unit for the sidelink resource allocation in the unauthorized spectrum is the sub-channel, and the first device occupies at least one sub-channel, which effectively improves the flexibility of a sidelink resource allocation process, so as to be suitable for personalized resource allocation scenarios, and improve resource utilization.

The unit for the sidelink resource allocation refers to the minimum granularity in the sidelink resource allocation process.

An embodiment of the present disclosure also provides a sidelink resource allocation method in an unauthorized spectrum, the first device occupies one interlace, and transmits data within all resource blocks of the occupied interlace. Thus, the transmission success rate of the data can be effectively ensured.

An embodiment of the present disclosure also provides a sidelink resource allocation method in an unauthorized spectrum, where the first indication information further includes at least one of the following: an index number of a resource block set; an index number of a sub-channel; or an index number of the interlace. In this case, the second device can quickly determine the corresponding resource fast set, sub-channel, or interlace based on the index number in the first indication information, which can effectively improve the practicality of the first indication information in the resource allocation process.

An embodiment of the present disclosure also provides a sidelink resource allocation method in an unauthorized spectrum, where the index number of the resource block set includes at least one of the following: an index number of a starting resource block set; an index number of an ending resource block set; or the number of the resource block set. Thus, indication effect of the index number of the resource block set in respect to resource block related information can be effectively enhanced.

The starting resource block set can be the first resource block set among multiple resource block sets indicated by the first indication information and used by the second device. The ending resource block set refers to the last resource block set among the multiple resource block sets indicated by the first indication information and used by the second device.

An embodiment of the present disclosure also provides a sidelink resource allocation method in an unauthorized spectrum, where the index number of the interlace includes at least one of the following: an index number of a starting interlace; an index number of an ending interlace; or the number of the interlace; where the interlace is globally numbered within the resource pool; and/or locally numbered within the resource block set, and/or locally numbered within the sub-channel. Thus, the indication effect of the index number of the interlace in respect to interlace related information can be effectively enhanced.

An embodiment of the present disclosure also provides a sidelink resource allocation method in an unauthorized spectrum, where in the case where the interlace is globally numbered within the resource pool, the index number of the interlace within the resource pool is unique; in the case where the interlace is locally numbered within the resource block set, the index number of the interlace within the resource block set is unique; and in the case where the interlace is locally numbered within the sub-channel, the index number of the interlace within the sub-channel is unique. Thus, the uniqueness of the index number of the interlace in a numbering space can be effectively improved, and impact on the resource allocation process by duplication of the index number in the numbering space.

For example, Terminal A or Base station sends the first indication information to Terminal B, which includes indication information correlated with the interlace in the resource pool for the sidelink. Terminal B performs the sidelink communication in the resource pool of the unauthorized spectrum according to the first indication information.

All interlaces (interlaces) in one resource pool are uniformly numbered, and the index numbers of all interlaces in the resource pool are unique, that is, respective interlaces in the resource pool correspond to different index numbers. As shown in FIG. 3a, which is a schematic diagram of an interlace numbering method provided by an embodiment of the present disclosure, the resource block has a total of 5 interlaces, whose index numbers are respectively 0 to 4. The index numbers of the interlaces are unique within the resource pool.

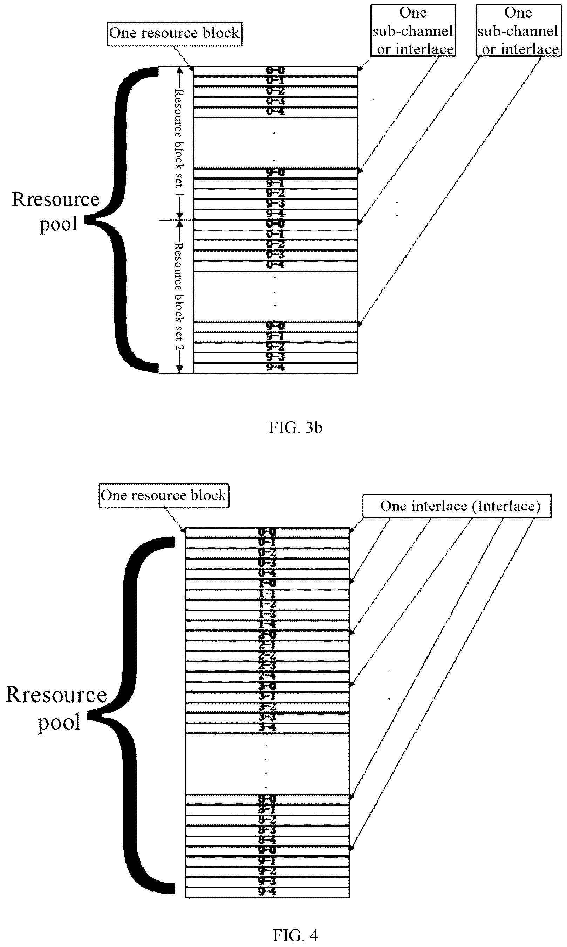

One resource pool includes multiple resource block sets (RB sets), and the interlace is numbered within the resource block set. The index numbers of all interlaces within the resource block set are unique. As shown in FIG. 3b, which is a schematic diagram of another interlace numbering method provided by an embodiment of the present disclosure, there are two resource block sets in one resource pool, and there are five interlaces in Resource block set 1, whose index numbers are respectively 0 to 4; there are also 5 interlaces in Resource block set 2, whose index numbers are respectively 0 to 4; that is, the interlace is numbered within the resource block set, and the index numbers of the interlaces within one resource block set are unique; while the index numbers of the interlaces are not unique within the resource pool. For example, in this example, Index number 0 corresponds to two interlaces.

By adopting the above interlace numbering method, the indication effect of the interlace allocated to the second device in the first indication information can be effectively improved. For example, when numbering within the resource block set, in addition to indicating the index number of the interlace, it is also necessary to indicate the index number of the resource block set. In another example, the interlace is uniformly numbered within the resource pool, without informing the index number of the resource block set, and thus a signaling overhead can be reduced.

An embodiment of the present disclosure also provides a sidelink resource allocation method in an unauthorized spectrum, where the first indication information includes: an index number of the interlace, where the index number of the interlace is used to determine the interlace allocated to the second device; where the resource pool includes multiple interlaces; the second device occupies one interlace; or the second device occupies multiple interlaces, where the index numbers of the multiple interlaces are consecutive; a unit for sidelink resource allocation in the unauthorized spectrum is the interlace. Thus, when using the interlace as the unit for the sidelink resource allocation in the unauthorized spectrum, the index number of the allocated interlace can be determined according to the first indication information, so as to quickly determine the interlace allocated to the second device from multiple interlaces in the resource pool, thereby improving resource allocation efficiency and reliability.

For example, Terminal A or Base station sends the first indication information to Terminal B, which includes indication information correlated with the interlace in the resource pool for the sidelink. Terminal B performs the sidelink communication in the resource pool of the unauthorized spectrum according to the first indication information.

One resource pool includes multiple interlaces (interlaces), and a terminal occupies at least one interlace; the unit for the sidelink resource allocation in the unauthorized spectrum is the interlace, and the terminal occupies at least one interlace. In a case where the terminal occupies multiple interlaces, these interlaces are consecutive; in a case where the terminal occupies one interlace, data will be transmitted within all resource blocks within that interlace. Multiple interlaces being consecutive means that the index numbers of the interlaces are consecutive.

As shown in FIG. 4, which is a schematic diagram of the resource pool provided by an embodiment of the present disclosure, Terminal A and Terminal B perform the sidelink communication in the resource pool for the sidelink. A subcarrier spacing (SubCarrier Spacing, SCS) of this resource pool is 30KHz, including 50 resource blocks RB and occupying a bandwidth of 20MHz. Each rectangle in the figure (index number: M-N) represents one resource block with index number M-N, where M is an integer from 0 to 9 and N is an integer from 0 to 4. 10 RBs in a discrete distribution with the index numbers M-0 (M ranging from 0 to 9) form one interlace with index number 0. Similarly, 10 RBs in discrete distribution with index numbers M-1 (M ranging from 0 to 9) form an interlace with index number 1, and so on. 10 RBs in discrete distribution with index numbers M-4 (M ranging from 0 to 9) form an interlace with index number 4. At this point, an interval between the RBs in the interlace is 4 RBs. In this way, the entire resource pool is divided into 5 interlaces (index numbers are 0 to 4 respectively), each interlace occupies 10 RBs. Terminal A occupies two consecutive interlaces, namely interlaces with index numbers 0 and 1, and the terminal would transmit data within all 20 RBs of these two interlaces.

By adopting the sending method of the first indication information mentioned above, Terminal B can obtain the resource allocation information of the sidelink communication in the resource pool of the unauthorized spectrum, so that Terminal B can determine the sidelink communication resources of "Resource pool-Interlace" according to the first indication information and complete the sidelink communication, thereby meeting the regulatory requirements in the unauthorized spectrum access, enhancing the transmission success rate of the sidelink data packet, and the indication method is simple with low signaling overhead.

An embodiment of the present disclosure also provides a sidelink resource allocation method in an unauthorized spectrum, where the first indication information includes: an index number of a resource block set and an index number of the interlace, where the index number of the resource block set and the index number of the interlace are used to determine the interlace allocated to the second device; where the resource pool includes at least one resource block set, each resource block set includes multiple interlaces; the second device occupies one interlace; or the second device occupies multiple interlaces, where the index numbers of the multiple interlaces are consecutive; a unit for sidelink resource allocation in the unauthorized spectrum is the interlace. Thus, based on a three-level indication, flexible indication requirements of the large broadband can be met, which can effectively improve the indication effect of the first indication information.

For example, Terminal A or Base station sends the first indication information to Terminal B, which includes indication information correlated with the interlace in the resource pool for the sidelink. Terminal B performs the sidelink communication in the resource pool of the unauthorized spectrum according to the first indication information.

One resource pool includes at least one resource block set (RB set), each resource block set includes multiple interlaces, and the terminal occupies at least one interlace. The unit for the sidelink resource allocation in the unauthorized spectrum is the interlace, and the terminal occupies at least one interlace. In a case where the terminal occupies multiple interlaces, these interlaces are consecutive; in a case where the terminal occupies one interlace, the data is transmitted within all resource blocks within that interlace.

Multiple interlaces being consecutive means that the index numbers of the interlaces are consecutive.

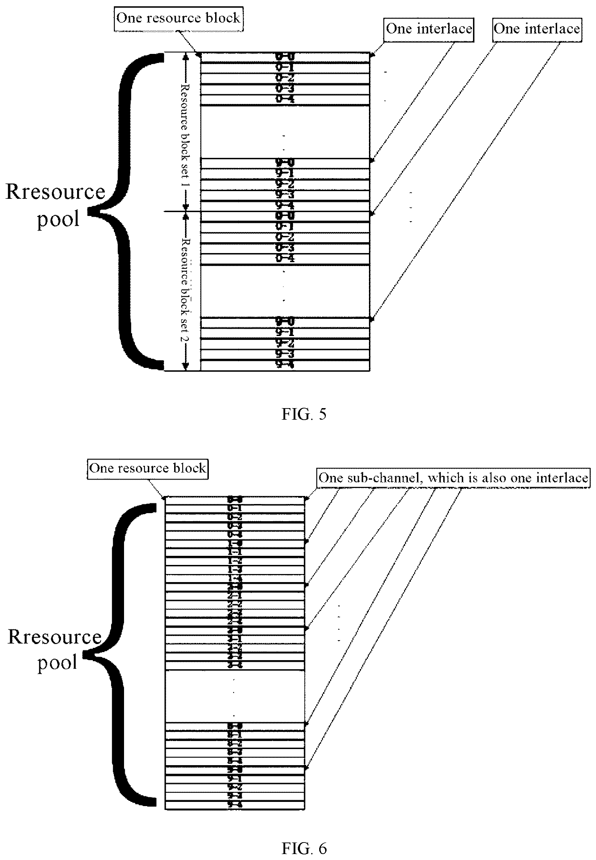

As shown in FIG. 5, which is a schematic diagram of another resource pool provided by an embodiment of the present disclosure, Terminal A and Terminal B perform the sidelink communicate in the resource pool for the sidelink. The SCS of this resource pool is 30KHz, including 100 resource blocks RB and occupying the bandwidth of 40MHz. The resource pool is composed of two resource block sets, shown as Resource block set 1 and Resource block set 2 in the figure. Each resource block set includes 50 RBs and occupies 20MHz. For Resource block set 1, each rectangle (index number: M-N) in the figure represents one resource block with index number M-N, where M is an integer from 0 to 9 and N is an integer from 0 to 4. 10 RBs in discrete distribution with 10 index numbers M-0 (M ranging from 0 to 9) forms one interlace (Interlace) with index number 0. Similarly, 10 RBs in discrete distribution with index numbers M-1 (M ranging from 0 to 9) form an interlace with index number 1, and so on. 10 RBs in discrete distribution with index numbers M-4 (M ranging from 0 to 9) form an interlace with index number 4. In this way, Resource block set 1 is divided into 5 interlaces, each interlace occupies 10 RBs. For Resource block set 2, the composition is also similar. Terminal A occupies two consecutive interlaces in Resource block set 1, namely interlaces with index numbers 0 and 1, and transmits data within all 20 RBs of these two interlaces.

By adopting the sending method of the first indication information mentioned above, Terminal B can obtain the resource allocation information of the sidelink communication in the resource pool of the unauthorized spectrum, so that terminal B can determine the sidelink communication resources of "Resource pool-Resource block set-Interlace" according to the first indication information and complete the sidelink communication, thereby meeting the regulatory requirements in the unauthorized spectrum access, enhancing the transmission success rate of the sidelink data packet, and adopting the three-level indication, which can meet the flexible indication requirements of the large bandwidth.

An embodiment of the present disclosure also provides a sidelink resource allocation method in an unauthorized spectrum, where the first indication information includes: an index number of the interlace and an index number of a sub-channel, where the index number of the interlace and the index number of the sub-channel are used to determine the interlace allocated to the second device; where the resource pool includes at least one sub-channel, and each sub-channel includes at least one interlace; the second device occupies one interlace or sub-channel; or the second device occupies multiple interlaces or multiple sub-channels, where the index numbers of the multiple interlaces are consecutive, or the index numbers of the multiple sub-channels are consecutive; a unit for sidelink resource allocation in the unauthorized spectrum is the interlace or the sub-channel. Therefore, relevant concepts of the sub-channel in the intelligent connected vehicle technology can be reused in resource allocation to reduce a magnitude of protocol changes and improve the portability of the sidelink resource allocation method in the authorized spectrum.

For example, Terminal A or Base station sends the first indication information to Terminal B, which includes indication information correlated with the interlace in the resource pool for the sidelink. Terminal B performs the sidelink communication in the resource pool of the unauthorized spectrum according to the first indication information.

One resource pool includes at least one sub-channel, each sub-channel includes one interlace, or each sub-channel includes multiple interlace, and the terminal occupies at least one sub-channel or interlace.

The unit for the sidelink resource allocation in the unauthorized spectrum is the interlace, and the terminal occupies at least one interlace; or, the unit for the sidelink resource allocation in the unauthorized spectrum is the sub-channel, and the terminal occupies at least one sub-channel. In a case where the terminal occupies multiple sub-channels, these sub-channels are consecutive; in a case where the terminal occupies multiple interlaces, these interlaces are consecutive. When occupying one interlace or sub-channel, the terminal will transmit data within all resource blocks within that interlace. The interlaces being consecutive means that the index numbers of the interlaces are consecutive; the sub-channels being consecutive means that the index numbers of the sub-channels are consecutive.

As shown in FIG. 6, which is a schematic diagram of another resource pool provided by an embodiment of the present disclosure, Terminal A and Terminal B perform the sidelink communication in the resource pool for the sidelink. The SCS of this resource pool is 30KHz, including 50 resource blocks RB and occupying the bandwidth of 20MHz. Each rectangle in the figure (index number: M-N) represents one resource block with index numbers M-N, where M is an integer from 0 to 9 and N is an integer from 0 to 4. 10 RBs in discrete distribution with index numbers M-0 (M ranging from 0 to 9) form one interlace with index number 0; at the same time, the interlace with index number 0 is also the sub-channel with index number 0. Similarly, 10 RBs in discrete distribution with index numbers M-1 (M ranging from 0 to 9) form an interlace with index number 1, and so on. 10 RBs in discrete distribution with index numbers M-4 (M ranging from 0 to 9) form an interlace with index number 4. In this way, the entire resource pool is divided into 5 interlayers (or 5 sub-channels), each interlace occupies 10 RBs. Terminal A occupies two consecutive interlaces (or sub-channels), namely interlaces (or sub-channels) with index numbers 0 and 1 respectively, and transmits data within all 20 RBs of these two interlaces (or sub-channels).

It can be understood that in this embodiment, one sub-channel can be equivalent to one interlace, or one sub-channel can also include multiple interlaces.

By adopting the sending method of the first indication information mentioned above, Terminal B can obtain the resource allocation information of the sidelink communication in the resource pool of the unauthorized spectrum, so that Terminal B can determine the sidelink communication resources of "Resource pool-Sub-channel-Interlace" according to the first indication information and complete the sidelink communication, thereby meeting the regulatory requirements in the unauthorized spectrum access, enhancing the transmission success rate of the sidelink data packet, and reusing the concept of sub-channels in V2X with minimal protocol changes.

An embodiment of the present disclosure also provides a sidelink resource allocation method in an unauthorized spectrum, where the first indication information includes: an index number of a resource block set, an index number of the interlace and an index number of a sub-channel, where the index number of the resource block set, the index number of the interlace and the index number of the sub-channel are used to determine the interlace allocated to the second device; where the resource pool includes at least one resource block set, each resource block set includes at least one sub-channel, each sub-channel includes at least one interlace; or the resource pool includes at least one sub-channel, each sub-channel includes at least one resource block set, each resource block set includes multiple interlace; the second device occupies one interlace or sub-channel; or the second device occupies multiple interlaces or multiple sub-channels, where the index numbers of the multiple interlaces are consecutive, or the index numbers of the multiple sub-channels are consecutive; a unit for sidelink resource allocation in the unauthorized spectrum is the interlace or the sub-channel. Therefore, based on a multi-level indication, the flexible indication requirements of the large broadband can be met, the transmission success rate of the sidelink data packet can be effectively enhancing.

For example, Terminal A or Base station sends the first indication information to Terminal B, which includes indication information correlated with the interlace in the resource pool for the sidelink. Terminal B performs the sidelink communication in the resource pool of the unauthorized spectrum according to the first indication information.

One resource pool includes at least one resource block set, each resource block set includes at least one sub-channel, each sub-channel includes one interlace, or each sub-channel includes multiple interlace, and the terminal occupies at least one sub-channel or interlace. The unit for the sidelink resource allocation in the unauthorized spectrum is the interlace, and the terminal occupies at least one interlace; or, the unit for the sidelink resource allocation in the unauthorized spectrum is the sub-channel, and the terminal occupies at least one sub-channel. In a case where the terminal occupies multiple sub-channels, these sub-channels are consecutive; in a case where the terminal occupies multiple interlaces, these interlaces are consecutive. When occupying one interlace or sub-channel, the terminal will transmit data within all resource blocks within that interlace. The interlaces being consecutive means that the index numbers of the interlaces are consecutive; the sub-channels being consecutive means that the index numbers of the sub-channels are consecutive.

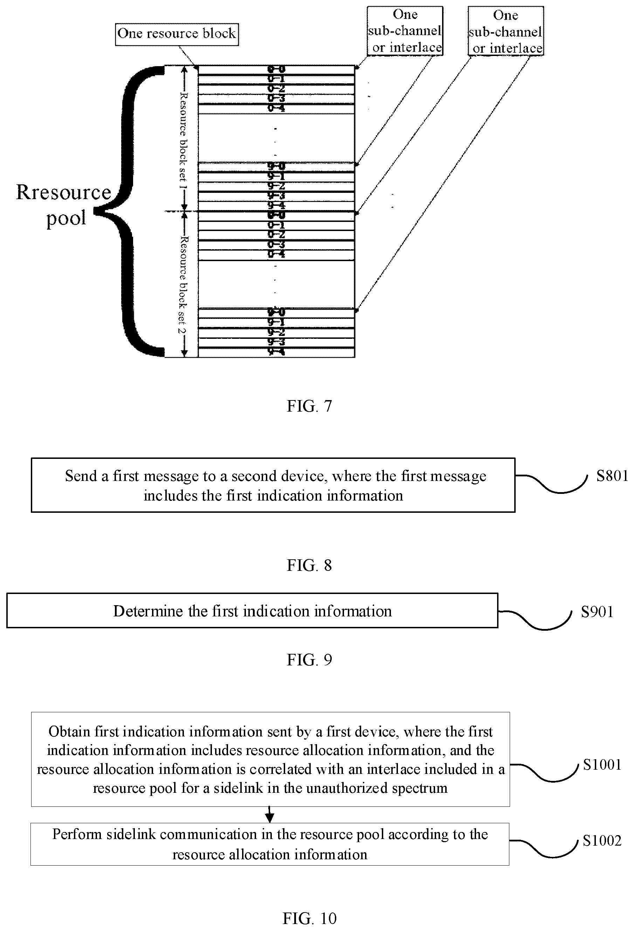

As shown in FIG. 7, which is a schematic diagram of another resource pool provided by an embodiment of the present disclosure, Terminal A and Terminal B perform the sidelink communicate in the resource pool for the sidelink. The SCS of this resource pool is 30KHz, including 100 resource blocks RB and occupying the bandwidth of 40MHz. The resource pool is composed of two resource block sets, shown as Resource block set 1 and Resource block set 2 in the figure. Each resource block set includes 50 RBs and occupies 20MHz. For Resource block set 1, each rectangle (index number: M-N) in the figure represents one resource block with index number M-N, where M is an integer from 0 to 9 and N is an integer from 0 to 4. 10 RBs in discrete distribution with index numbers M-0 (M ranging from 0 to 9) forms one interlace with index number 0; at the same time, the interlace with index number 0 is also the sub-channel with index number 0. Similarly, 10 RBs in discrete distribution with index numbers M-1 (M ranging from 0 to 9) form an interlace with index number 1, and so on. 10 RBs in discrete distribution with index numbers M-4 (M ranging from 0 to 9) form an interlace with index number 4. In this way, Resource block set 1 is divided into 5 interlaces (or 5 sub-channels), each interlace occupies 10 RBs. For Resource block set 2, the composition is also similar. Terminal A occupies two consecutive interlaces (or sub-channels) in Resource block set 1, which are interlaces (or sub-channels) with index numbers 0 and 1 respectively, and transmits data within all 20 RBs of these two interlaces (or sub-channels).

By adopting the sending method of the first indication information mentioned above, Terminal B can obtain the resource allocation information of the sidelink communication in the resource pool of the unauthorized spectrum, so that Terminal B can determine the sidelink communication resources of "Resource pool-Resource block set-Sub-channel-Interlace" according to the first indication information and complete the sidelink communication, thereby meeting the OCB and PSD regulatory requirements in the unauthorized spectrum access, enhancing the transmission success rate of the sidelink data packet, and adopting the multi-level indication, which can meet the flexible indication requirements of the large bandwidth.

FIG. 8 is a flowchart of a sidelink resource allocation method in an unauthorized spectrum provided by another embodiment of the present disclosure.

As shown in FIG. 8, the sidelink resource allocation method in the unauthorized spectrum includes:
S801: send a first message to a second device, where the first message includes the first indication information.

The first message can be generated by a network device or the first device and sent to the second device. The first message includes but is not limited to the first indication information.

In this embodiment, by sending the first message to the second device, where the first message includes the first indication information, the first indication information can be indicated to the second device based on the first message, thereby providing reliable reference information for the resource allocation process of the second device.

An embodiment of the present disclosure also provides a sidelink resource allocation method in an unauthorized spectrum, where the first message includes at least one of the following: downlink control information DCI; sidelink control information SCI; media access control-control element MAC CE information; a radio resource control RRC message; or a pre-configured message. Thus, the indication flexibility of the first message can be effectively improved.

The downlink control information (Downlink control information, DCI) is carried by a physical downlink control channel (Physical Downlink Control Channel, PDCCH). The downlink control information sent by the eNB to the UE can include relevant information such as uplink and downlink resource allocation, hybrid automatic repeat request, power control and the like. The media access control-control element (Media Access Control -Control Element, MAC CE) can be used to control a transmission process of data packets.

The radio resource control (Radio Resource Control, RRC) can be used to process third layer information of a control plane between the network device and the terminal device. The pre-configured information can be relevant information pre-configured based on the application scenario.

For example, Terminal A or Base station sends the first indication information to Terminal B, which includes indication information correlated with the interlace in the resource pool for the sidelink. Terminal B performs the sidelink communication in the resource pool of the unauthorized spectrum according to the first indication information.

Terminal A or Base station indicates to Terminal B the sidelink resources in the unauthorized spectrum that Terminal B uses through the first indication information, and the first indication information includes at least one of the following information: an index number of at least one resource block set; an index number of a starting resource block set and an index number of an ending resource block set; an index number of a starting resource block set and the number of the resource block set; an index number of at least one interlace; an index number of a starting interlace and the index number of an ending interlace; or the index number of the starting interlace and the number of the interlace; when the interlace is globally numbered within the resource pool, the first indication information includes the index number of the interlace; when the interlace is locally numbered within the resource block set, the first indication information includes the index number of the resource block set and the index of the interlace index number; the first indication information is sent through the following methods: the downlink control information DCI; the sidelink control information SCI; the media access control-control element MAC CE information; the radio resource control RRC message; and the pre-configured message.

By adopting the sending method of the first indication information mentioned above, Terminal B can obtain the resource allocation information of the sidelink communication in the resource pool of the unauthorized spectrum, so that Terminal B can determine the sidelink communication resources and complete the sidelink communication according to the first indication information, thereby meeting the regulatory requirements in an unauthorized spectrum access and improving the transmission success rate of the sidelink data packet.

FIG. 9 is a flowchart of a sidelink resource allocation method in an unauthorized spectrum provided by another embodiment of the present disclosure.

As shown in FIG. 9, the sidelink resource allocation method in the unauthorized spectrum includes:
S901: determine the first indication information.

In this embodiment, by determining the first indication information, reliable reference information can be provided for sidelink resource allocation in the unauthorized spectrum, which can effectively enhance a transmission success rate of sidelink data packets.

An embodiment of the present disclosure also provides a sidelink resource allocation method in an unauthorized spectrum, where the resource pool compliances with at least one of the following: each resource block set occupies 20 megahertz MHz bandwidth; there is a guard band between two adjacent resource block sets; each interlace includes at least 10 resource blocks; in a case where a subcarrier spacing SCS is 15 kHz, each resource block set includes 10 interlaces; in a case where the subcarrier spacing SCS is 30 kHz, each resource block set includes 5 interlaces; or the number of resource block sets included in each sub-channel is an integer.

In the embodiment of the present disclosure, by deploying the guard band between the adjacent resource block sets, an independence of the resource block sets during use can be effectively improved, and interference introduced from the used resource block sets on adjacent resource fast sets can be effectively avoided.

FIG. 10 is a flowchart of yet another sidelink resource allocation method in an unauthorized spectrum provided by an embodiment of the present disclosure. The sidelink resource allocation method in the unauthorized spectrum in this embodiment can be applied to a second device. As shown in FIG. 10, the method may include but is not limited to steps S1001 and S1002.

S1001: obtain first indication information sent by a first device, where the first indication information includes resource allocation information, and the resource allocation information is correlated with an interlace included in a resource pool for a sidelink in the unauthorized spectrum.

S1002: perform sidelink communication in the resource pool according to the resource allocation information.

In this embodiment, by obtaining the first indication information sent by the first device, where the first indication information includes the resource allocation information, and the resource allocation information is correlated with the interlace included in the resource pool for the sidelink in the unauthorized spectrum, and performing the sidelink communication in the resource pool according to the resource allocation information, the second device is enabled to determine sidelink communication resources according to the first indication information and complete the sidelink communication, thereby enhancing a transmission success rate of sidelink data packets.

An embodiment of the present disclosure also provides a sidelink resource allocation method in an unauthorized spectrum, where the resource pool includes at least one of the following: at least one interlace; at least one resource block set, each resource block set includes at least one interlace; at least one sub-channel, each sub-channel includes at least one interlace; at least one resource block set, each resource block set includes at least one sub-channel, and each sub-channel includes at least one interlace; or at least one sub-channel, each sub-channel includes at least one resource block set, and each resource block set includes at least one interlace. Thus, a configuration flexibility of the resource pool can be effectively enhanced, and a reliable resource support can be provided for the sidelink resource allocation process in the unauthorized spectrum.

An embodiment of the present disclosure also provides a sidelink resource allocation method in an unauthorized spectrum, where in a case where the sub-channel includes multiple interlaces, index numbers of the multiple interlaces are consecutive; in a case where the resource block set includes multiple interlaces, index numbers of the multiple interlaces are consecutive; in a case where the second device occupies multiple sub-channels, index numbers of the multiple sub-channels are consecutive; in a case where the second device occupies multiple interlaces, index numbers of the multiple interlaces are consecutive. Thus, the efficiency of the sidelink resource allocation in the unauthorized spectrum can be effectively improved and the resource utilization can be enhanced.

An embodiment of the present disclosure also provides a sidelink resource allocation method in an unauthorized spectrum, where a unit for sidelink resource allocation in the unauthorized spectrum is the interlace, and the second device occupies at least one interlace; or the unit for the sidelink resource allocation in the unauthorized spectrum is the sub-channel, and the second device occupies at least one sub-channel. Thus, an applicability of the sidelink resources in the unauthorized spectrum occupied by the second device can be ensured.

An embodiment of the present disclosure also provides a sidelink resource allocation method in an unauthorized spectrum, where the second device occupies one interlace, and transmits data within all resource blocks of the occupied interlace. Thus, the reliability of the second device during data transmission can be ensured and the transmission success rate of the sidelink data packet can be enhanced.

An embodiment of the present disclosure also provides a sidelink resource allocation method in an unauthorized spectrum, where the first indication information further includes at least one of the following: an index number of a resource block set; an index number of a sub-channel; or an index number of the interlace. Thus, indication effect of the first indication information can be effectively improved.

An embodiment of the present disclosure also provides a sidelink resource allocation method in an unauthorized spectrum, where the index number of the resource block set includes at least one of the following: an index number of a starting resource block set; an index number of an ending resource block set; or the number of the resource block set. Thus, the indication effect of the index number of the resource block set on the relevant information of the resource block set can be effectively improved.

An embodiment of the present disclosure also provides a sidelink resource allocation method in an unauthorized spectrum, where the index number of the interlace includes at least one of the following: an index number of a starting interlace; an index number of an ending interlace; or the number of the interlace; where the interlace is globally numbered within the resource pool; and/or locally numbered within the resource block set, and/or locally numbered within the sub-channel. Thus, the indication effect of the index number of the interlace on the interlace can be effectively improved and a flexibility of an interlace numbering process can be effectively enhanced.

An embodiment of the present disclosure also provides a sidelink resource allocation method in an unauthorized spectrum, where in the case where the interlace is globally numbered within the resource pool, the index number of the interlace within the resource pool is unique; in the case where the interlace is locally numbered within the resource block set, the index number of the interlace within the resource block set is unique; and in the case where the interlace is locally numbered within the sub-channel, the index number of the interlace within the sub-channel is unique. Thus, the uniqueness of the index number in a numbering space can be effectively improved, thereby effectively enhancing the indication effect of an interlace index on the interlace.

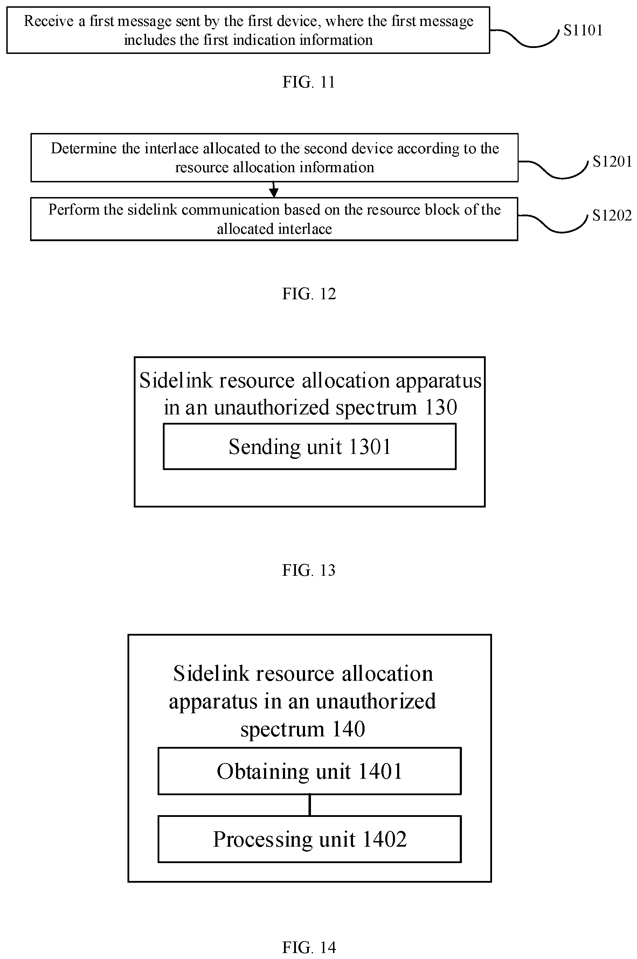

FIG. 11 is a flowchart of yet another sidelink resource allocation method in an unauthorized spectrum provided by an embodiment of the present disclosure. The sidelink resource allocation method in the unauthorized spectrum in this embodiment can be applied to a second device. As shown in FIG. 11, the method may include but is not limited to the following step:
S1101: receive a first message sent by the first device, where the first message includes the first indication information.

In this embodiment, by receiving the first message sent by the first device, which includes the first indication information, a reliability of a sidelink resource allocation process in the unauthorized spectrum can be effectively improved based on the first indication information, thereby effectively enhancing a transmission success rate of sidelink data packets.

An embodiment of the present disclosure also provides a sidelink resource allocation method in an unauthorized spectrum, where the first message includes at least one of the following: downlink control information DCI; sidelink control information SCI; media access control-control element MAC CE information; a radio resource control RRC message; or a pre-configured message. Thus, the flexibility and reliability of the indication of the first message can be effectively improved.

An embodiment of the present disclosure also provides a sidelink resource allocation method in an unauthorized spectrum, where the obtaining the first indication information sent by the first device includes at least one of the following: obtaining the first indication information sent by a network device, where the first indication information is determined by the network device, and the first device is the network device; or obtaining the first indication information sent by a terminal device, where the first indication information is determined by the network device or the terminal device, and the first device is the terminal device. Thus, a flexibility of an approach for obtaining the first indication information by the second device can be effectively improved to suit personalized application scenarios.

FIG. 12 is a flowchart of yet another sidelink resource allocation method in an unauthorized spectrum provided by an embodiment of the present disclosure. The sidelink resource allocation method in the unauthorized spectrum in this embodiment can be applied to a second device. As shown in FIG. 12, the method may include but is not limited to steps S120 and S1202.

S1201: determine the interlace allocated to the second device according to the resource allocation information.

S1202: perform the sidelink communication based on the resource block of the allocated interlace.

In this embodiment, by determining the interlace allocated to the second device according to the resource allocation information and performing the sidelink communication based on the resource block of the allocated interlace, the reliability of the interlace allocated to the second device can be effectively improved, thereby effectively enhancing a success rate of the sidelink communication.

An embodiment of the present disclosure also provides a sidelink resource allocation method in an unauthorized spectrum, where the resource pool compliances with at least one of the following: each resource block set occupies 20 megahertz MHz bandwidth; there is a guard band between two adjacent resource block sets; each interlace includes at least 10 resource blocks; in a case where a subcarrier spacing SCS is 15 kHz, each resource block set includes 10 interlaces; in a case where the subcarrier spacing SCS is 30 kHz, each resource block set includes 5 interlaces; or the number of resource block sets included in each sub-channel is an integer. Thus, an applicability of the resource pool in the sidelink resource allocation process in the unauthorized spectrum can be effectively improved.

FIG. 13 is a structural schematic diagram of a sidelink resource allocation apparatus in an unauthorized spectrum provided by an embodiment of the present disclosure.

As shown in FIG. 13, the sidelink resource allocation apparatus 130 in the unauthorized spectrum includes:
a sending unit 1301, configured to send first indication information to a second device, where the first indication information includes resource allocation information, and the resource allocation information is correlated with an interlace included in a resource pool for a sidelink in the unauthorized spectrum.

In some embodiments of the present disclosure, the resource pool includes at least one of the following: at least one interlace; at least one resource block set, each resource block set includes at least one interlace; at least one sub-channel, each sub-channel includes at least one interlace; at least one resource block set, each resource block set includes at least one sub-channel, and each sub-channel includes at least one interlace; or at least one sub-channel, each sub-channel includes at least one resource block set, and each resource block set includes at least one interlace.

In some embodiments of the present disclosure, in a case where the sub-channel includes multiple interlaces, index numbers of the multiple interlaces are consecutive; in a case where the resource block set includes multiple interlaces, index numbers of the multiple interlaces are consecutive; in a case where the first device occupies multiple sub-channels, index numbers of the multiple sub-channels are consecutive; in a case where the first device occupies multiple interlaces, index numbers of the multiple interlaces are consecutive.

In some embodiments of the present disclosure, a unit for sidelink resource allocation in the unauthorized spectrum is the interlace, and the first device occupies at least one interlace; or the unit for the sidelink resource allocation in the unauthorized spectrum is the sub-channel, and the first device occupies at least one sub-channel.

In some embodiments of the present disclosure, the first device occupies one interlace, and transmits data within all resource blocks of the occupied interlace.

In some embodiments of the present disclosure, the first indication information further includes at least one of the following: an index number of a resource block set; an index number of a sub-channel; or an index number of the interlace.

In some embodiments of the present disclosure, the index number of the resource block set includes at least one of the following: an index number of a starting resource block set; an index number of an ending resource block set; or the number of the resource block set.

In some embodiments of the present disclosure, the index number of the interlace includes at least one of the following: an index number of a starting interlace; an index number of an ending interlace; or the number of the interlace; where the interlace is globally numbered within the resource pool; and/or locally numbered within the resource block set, and/or locally numbered within the sub-channel.

In some embodiments of the present disclosure, in the case where the interlace is globally numbered within the resource pool, the index number of the interlace within the resource pool is unique; in the case where the interlace is locally numbered within the resource block set, the index number of the interlace within the resource block set is unique; and in the case where the interlace is locally numbered within the sub-channel, the index number of the interlace within the sub-channel is unique.

In some embodiments of the present disclosure, the first indication information includes: an index number of the interlace, where the index number of the interlace is used to determine the interlace allocated to the second device; where the resource pool includes multiple interlaces; the second device occupies one interlace; or the second device occupies multiple interlaces, where the index numbers of the multiple interlaces are consecutive; a unit for sidelink resource allocation in the unauthorized spectrum is the interlace.

In some embodiments of the present disclosure, the first indication information includes: an index number of a resource block set and an index number of the interlace, where the index number of the resource block set and the index number of the interlace are used to determine the interlace allocated to the second device; where the resource pool includes at least one resource block set, each resource block set includes multiple interlaces; the second device occupies one interlace; or the second device occupies multiple interlaces, where the index numbers of the multiple interlaces are consecutive; a unit for sidelink resource allocation in the unauthorized spectrum is the interlace.

In some embodiments of the present disclosure, the first indication information includes: an index number of the interlace and an index number of a sub-channel, where the index number of the interlace and the index number of the sub-channel are used to determine the interlace allocated to the second device; where the resource pool includes at least one sub-channel, and each sub-channel includes at least one interlace; the second device occupies one interlace or sub-channel; or the second device occupies multiple interlaces or multiple sub-channels, where the index numbers of the multiple interlaces are consecutive, or the index numbers of the multiple sub-channels are consecutive; a unit for sidelink resource allocation in the unauthorized spectrum is the interlace or the sub-channel.

In some embodiments of the present disclosure, the first indication information includes: an index number of a resource block set, an index number of the interlace and an index number of a sub-channel, where the index number of the resource block set, the index number of the interlace and the index number of the sub-channel are used to determine the interlace allocated to the second device; where the resource pool includes at least one resource block set, each resource block set includes at least one sub-channel, each sub-channel includes at least one interlace; or the resource pool includes at least one sub-channel, each sub-channel includes at least one resource block set, each resource block set includes multiple interlace; the second device occupies one interlace or sub-channel; or the second device occupies multiple interlaces or multiple sub-channels, where the index numbers of the multiple interlaces are consecutive, or the index numbers of the multiple sub-channels are consecutive; a unit for sidelink resource allocation in the unauthorized spectrum is the interlace or the sub-channel.

In some embodiments of the present disclosure, the sending unit is specifically configured to: send a first message to the second device, where the first message includes the first indication information; where the first message includes at least one of the following: downlink control information DCI; sidelink control information SCI; media access control-control element MAC CE information; a radio resource control RRC message; or a pre-configured message.

In some embodiments of the present disclosure, the resource pool compliances with at least one of the following: each resource block set occupies 20 megahertz MHz bandwidth; there is a guard band between two adjacent resource block sets; each interlace includes at least 10 resource blocks; in a case where a subcarrier spacing SCS is 15 kHz, each resource block set includes 10 interlaces; in a case where the subcarrier spacing SCS is 30 kHz, each resource block set includes 5 interlaces; or the number of resource block sets included in each sub-channel is an integer.

It should be noted that a division of units in embodiments of the present disclosure is illustrative and only a logical functional division. In actual implementation, there may be other division methods. In addition, various functional units in various embodiments in the present disclosure can be integrated into one processing unit, which can exist physically separately, or two or more units may be integrated into one unit. The integrated unit mentioned above can be implemented in a form of hardware or in the form of software functional unit.

If the integrated unit mentioned above is implemented in the form of software functional unit and sold or used as a stand-alone product, it can be stored in a processor-readable storage medium.

Based on this understanding, essence of the technical solution of the present disclosure, a portion of which that contributes to the existing technology, or all or part of the technical solution can be embodied in the form of a software product, which is stored in a storage medium and includes several instructions used for enabling a computer device (which can be a personal computer, server, or network device, and the like) or a processor (processor) to execute all or part of steps of the method in the various embodiments of the present disclosure. The aforementioned storage medium includes various mediums that can store program codes, such as a USB flash drive, a portable hard drive, a read only memory (Read Only Memory, ROM), a random access memory (Random Access Memory, RAM), a magnetic disk or an optical disk.

It should be noted that the apparatus provided by the embodiment of the present disclosure as mentioned above can achieve all of method steps implemented in the method embodiment mentioned above, and can achieve the same technical effects. Therefore, specific descriptions of the same parts and beneficial effects as the method embodiment in this embodiment will not be repeated here.

In this embodiment, by sending the first indication information to the second device, where the first indication information includes the resource allocation information, and the resource allocation information is correlated with the interface included in the resource pool for the sidelink in the unauthorized spectrum, a reliability of a sidelink resource allocation process in the unauthorized spectrum can be effectively improved based on the first indication information, thereby effectively enhancing a transmission success rate of sidelink data packets.

FIG. 14 is a structural schematic diagram of yet another sidelink resource allocation apparatus in an unauthorized spectrum provided by an embodiment of the present disclosure.

As shown in FIG. 14, the sidelink resource allocation apparatus 140 in the unauthorized spectrum includes:
an obtaining unit 1401, configured to obtain first indication information sent by a first device, where the first indication information includes resource allocation information, and the resource allocation information is correlated with an interlace included in a resource pool for a sidelink in the unauthorized spectrum; and
a processing unit 1402, configured to perform sidelink communication in the resource pool according to the resource allocation information.

In some embodiments of the present disclosure, the resource pool includes at least one of the following: at least one interlace; at least one resource block set, each resource block set includes at least one interlace; at least one sub-channel, each sub-channel includes at least one interlace; at least one resource block set, each resource block set includes at least one sub-channel, and each sub-channel includes at least one interlace; or at least one sub-channel, each sub-channel includes at least one resource block set, and each resource block set includes at least one interlace.

In some embodiments of the present disclosure, in a case where the sub-channel includes multiple interlaces, index numbers of the multiple interlaces are consecutive; in a case where the resource block set includes multiple interlaces, index numbers of the multiple interlaces are consecutive; in a case where the second device occupies multiple sub-channels, index numbers of the multiple sub-channels are consecutive; in a case where the second device occupies multiple interlaces, index numbers of the multiple interlaces are consecutive.

In some embodiments of the present disclosure, a unit for sidelink resource allocation in the unauthorized spectrum is the interlace, and the second device occupies at least one interlace; or the unit for the sidelink resource allocation in the unauthorized spectrum is the sub-channel, and the second device occupies at least one sub-channel.

In some embodiments of the present disclosure, the second device occupies one interlace, and transmits data within all resource blocks of the occupied interlace.

In some embodiments of the present disclosure, the first indication information further includes at least one of the following: an index number of a resource block set; an index number of a sub-channel; or an index number of the interlace.

In some embodiments of the present disclosure, the index number of the resource block set includes at least one of the following: an index number of a starting resource block set; an index number of an ending resource block set; or the number of the resource block set.

In some embodiments of the present disclosure, the index number of the interlace includes at least one of the following: an index number of a starting interlace; an index number of an ending interlace; or the number of the interlace; where the interlace is globally numbered within the resource pool; and/or locally numbered within the resource block set, and/or locally numbered within the sub-channel.

In some embodiments of the present disclosure, in the case where the interlace is globally numbered within the resource pool, the index number of the interlace within the resource pool is unique; in the case where the interlace is locally numbered within the resource block set, the index number of the interlace within the resource block set is unique; and in the case where the interlace is locally numbered within the sub-channel, the index number of the interlace within the sub-channel is unique.

In some embodiments of the present disclosure, the obtaining unit 1401 is specifically configured to: receive a first message sent by the first device, where the first message includes the first indication information; where the first message includes at least one of the following: downlink control information DCI; sidelink control information SCI; media access control-control element MAC CE information; a radio resource control RRC message; or a pre-configured message.

In some embodiments of the present disclosure, the obtaining unit 1401 is specifically configured to: obtain the first indication information sent by a network device, where the first indication information is determined by the network device, and the first device is the network device; and obtain the first indication information sent by a terminal device, where the first indication information is determined by the network device or the terminal device, and the first device is the terminal device.

In some embodiments of the present disclosure, the processing unit 1402 is specifically configured to: determine the interlace allocated to the second device according to the resource allocation information; and perform the sidelink communication based on the resource block of the allocated interlace.

In some embodiments of the present disclosure, the resource pool compliances with at least one of the following: each resource block set occupies 20 megahertz MHz bandwidth; there is a guard band between two adjacent resource block sets; each interlace includes at least 10 resource blocks; in a case where a subcarrier spacing SCS is 15 kHz, each resource block set includes 10 interlaces; in a case where the subcarrier spacing SCS is 30 kHz, each resource block set includes 5 interlaces; or the number of resource block sets included in each sub-channel is an integer.

It should be noted that a division of units in embodiments of the present disclosure is illustrative and only a logical functional division. In actual implementation, there may be other division methods. In addition, various functional units in various embodiments in the present disclosure can be integrated into one processing unit, which can exist physically separately, or two or more units may be integrated into one unit. The integrated unit mentioned above can be implemented in a form of hardware or in the form of software functional unit.

If the integrated unit mentioned above is implemented in the form of software functional unit and sold or used as a stand-alone product, it can be stored in a processor-readable storage medium.

Based on this understanding, essence of the technical solution of the present disclosure, a portion of which that contributes to the existing technology, or all or part of the technical solution can be embodied in the form of a software product, which is stored in a storage medium and includes several instructions used for enabling a computer device (which can be a personal computer, server, or network device, and the like) or a processor (processor) to execute all or part of steps of the method in the various embodiments of the present disclosure. The aforementioned storage medium includes various mediums that can store program codes, such as a USB flash drive, a portable hard drive, a read only memory (Read Only Memory, ROM), a random access memory (Random Access Memory, RAM), a magnetic disk or an optical disk.

It should be noted that the apparatus provided by the embodiment of the present disclosure as mentioned above can achieve all of method steps implemented in the method embodiment mentioned above, and can achieve the same technical effects. Therefore, specific descriptions of the same parts and beneficial effects as the method embodiment in this embodiment will not be elaborate here.

In this embodiment, by obtaining the first indication information sent by the first device, where the first indication information includes the resource allocation information, and the resource allocation information is correlated with the interlace included in the resource pool for the sidelink in the unauthorized spectrum, and performing the sidelink communication in the resource pool according to the resource allocation information, a reliability of a resource allocation process can be effectively improved based on the first indication information, thereby effectively enhancing communication effect of the sidelink.

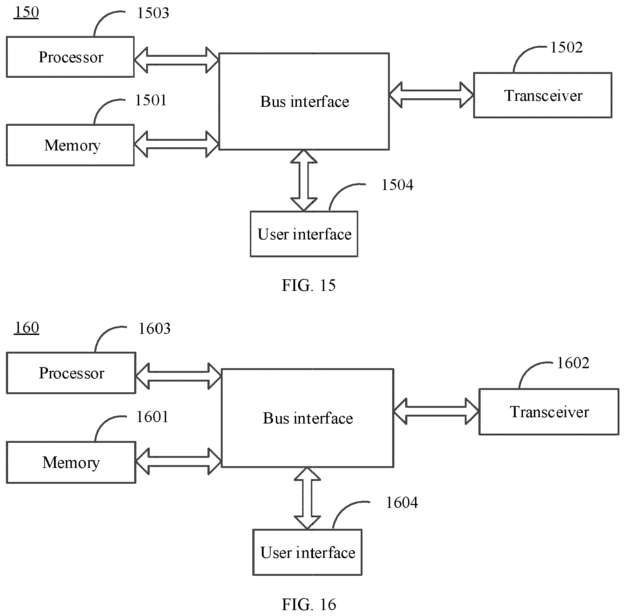

FIG. 15 is a structural schematic diagram of another sidelink resource allocation apparatus in an unauthorized spectrum provided by yet another embodiment of the present disclosure.

Referring to FIG. 15, the sidelink resource allocation apparatus 150 in the unauthorized spectrum includes a memory 1501, a transceiver 1502, a processor 1503, and a user interface 1504. The memory 1501 is configured to store computer programs; the transceiver 1502 is configured to transmit and receive data under control of the processor 1503; and the processor 1503 is configured to read the computer program in the memory 1501 and perform the following operations:
sending first indication information to a second device, where the first indication information includes resource allocation information, and the resource allocation information is correlated with an interlace included in a resource pool for a sidelink in the unauthorized spectrum.

In FIG. 15, a bus architecture can include any number of interconnected buses and bridges; specifically, various circuits of one or more processors represented by the processor 1503 and memories represented by the memory 1501 are connected together. The bus architecture can also link various other circuits such as peripheral devices, voltage regulators, and power management circuits together, which are well-known in this field. Therefore, the above will not be elaborate in this article. A bus interface provides interfaces. The transceiver 1502 can be multiple components, including a transmitter and a receiver, providing a unit for communicating with various other devices over transmission medium, and the transmission medium includes, the transmission medium includes transmission medium such as wireless channels, wired channels, optical cables, and the like. For different user devices, the user interface 1504 can also be an interface that can connect external and internal devices, and the connected devices include but not limited to keyboards, displays, speakers, microphones, joysticks, and the like.

The processor 1503 is responsible for managing the bus architecture and usual processing, while the memory 1501 can store data used by the processor 1503 when performing operations.

Optionally, the processor 1503 can be a CPU (Central Processing Unit), an ASIC (Application Specific Integrated Circuit, Application Specific Integrated Circuit), an FPGA (Field Programmable Gate Array, Field Programmable Gate Array), or a CPLD (Complex Programmable Logic Device, Complex Programmable Logic Device), and the processor can also adopt a multicore architecture.

The processor is configured to execute any of the methods provided by the embodiments of the present disclosure according to obtained executable instructions by calling the computer program stored in the memory. The processor and memory can also be physically separated and arranged separately.

In some embodiments of the present disclosure, the resource pool includes at least one of the following: at least one interlace; at least one resource block set, each resource block set includes at least one interlace; at least one sub-channel, each sub-channel includes at least one interlace; at least one resource block set, each resource block set includes at least one sub-channel, and each sub-channel includes at least one interlace; or at least one sub-channel, each sub-channel includes at least one resource block set, and each resource block set includes at least one interlace.

In some embodiments of the present disclosure, in a case where the sub-channel includes multiple interlaces, index numbers of the multiple interlaces are consecutive; in a case where the resource block set includes multiple interlaces, index numbers of the multiple interlaces are consecutive; in a case where the first device occupies multiple sub-channels, index numbers of the multiple sub-channels are consecutive; in a case where the first device occupies multiple interlaces, index numbers of the multiple interlaces are consecutive.

In some embodiments of the present disclosure, a unit for sidelink resource allocation in the unauthorized spectrum is the interlace, and the first device occupies at least one interlace; or the unit for the sidelink resource allocation in the unauthorized spectrum is the sub-channel, and the first device occupies at least one sub-channel.

In some embodiments of the present disclosure, the first device occupies one interlace, and transmits data within all resource blocks of the occupied interlace.

In some embodiments of the present disclosure, the first indication information further includes at least one of the following: an index number of a resource block set; an index number of a sub-channel; or an index number of the interlace.

In some embodiments of the present disclosure, the index number of the resource block set includes at least one of the following: an index number of a starting resource block set; an index number of an ending resource block set; or the number of the resource block set.

In some embodiments of the present disclosure, the index number of the interlace includes at least one of the following: an index number of a starting interlace; an index number of an ending interlace; or the number of the interlace; where the interlace is globally numbered within the resource pool; and/or locally numbered within the resource block set, and/or locally numbered within the sub-channel.

In some embodiments of the present disclosure, in the case where the interlace is globally numbered within the resource pool, the index number of the interlace within the resource pool is unique; in the case where the interlace is locally numbered within the resource block set, the index number of the interlace within the resource block set is unique; and in the case where the interlace is locally numbered within the sub-channel, the index number of the interlace within the sub-channel is unique.

In some embodiments of the present disclosure, the first indication information includes: an index number of the interlace, where the index number of the interlace is used to determine the interlace allocated to the second device; where the resource pool includes multiple interlaces; the second device occupies one interlace; or the second device occupies multiple interlaces, where the index numbers of the multiple interlaces are consecutive; a unit for sidelink resource allocation in the unauthorized spectrum is the interlace.

In some embodiments of the present disclosure, the first indication information includes: an index number of a resource block set and an index number of the interlace, where the index number of the resource block set and the index number of the interlace are used to determine the interlace allocated to the second device; where the resource pool includes at least one resource block set, each resource block set includes multiple interlaces; the second device occupies one interlace; or the second device occupies multiple interlaces, where the index numbers of the multiple interlaces are consecutive; a unit for sidelink resource allocation in the unauthorized spectrum is the interlace.

In some embodiments of the present disclosure, the first indication information includes: an index number of the interlace and an index number of a sub-channel, where the index number of the interlace and the index number of the sub-channel are used to determine the interlace allocated to the second device; where the resource pool includes at least one sub-channel, and each sub-channel includes at least one interlace; the second device occupies one interlace or sub-channel; or the second device occupies multiple interlaces or multiple sub-channels, where the index numbers of the multiple interlaces are consecutive, or the index numbers of the multiple sub-channels are consecutive; a unit for sidelink resource allocation in the unauthorized spectrum is the interlace or the sub-channel.

In some embodiments of the present disclosure, the first indication information includes: an index number of a resource block set, an index number of the interlace and an index number of a sub-channel, where the index number of the resource block set, the index number of the interlace and the index number of the sub-channel are used to determine the interlace allocated to the second device; where the resource pool includes at least one resource block set, each resource block set includes at least one sub-channel, each sub-channel includes at least one interlace; or the resource pool includes at least one sub-channel, each sub-channel includes at least one resource block set, each resource block set includes multiple interlace; the second device occupies one interlace or sub-channel; or the second device occupies multiple interlaces or multiple sub-channels, where the index numbers of the multiple interlaces are consecutive, or the index numbers of the multiple sub-channels are consecutive; a unit for sidelink resource allocation in the unauthorized spectrum is the interlace or the sub-channel.

In some embodiments of the present disclosure, the processor 1503 is specifically configured to: send a first message to the second device, where the first message includes the first indication information; where the first message includes at least one of the following: downlink control information DCI; sidelink control information SCI; media access control-control element MAC CE information; a radio resource control RRC message; or a pre-configured message.

In some embodiments of the present disclosure, the resource pool compliances with at least one of the following: each resource block set occupies 20 megahertz MHz bandwidth; there is a guard band between two adjacent resource block sets; each interlace includes at least 10 resource blocks; in a case where a subcarrier spacing SCS is 15 kHz, each resource block set includes 10 interlaces; in a case where the subcarrier spacing SCS is 30 kHz, each resource block set includes 5 interlaces; or the number of resource block sets included in each sub-channel is an integer.

It should be noted that the apparatus provided by the embodiment of the present disclosure as mentioned above can achieve all of method steps implemented in the method embodiment mentioned above, and can achieve the same technical effects. Therefore, specific descriptions of the same parts and beneficial effects as the method embodiment in this embodiment will not be elaborate here.

FIG. 16 is a structural schematic diagram of yet another sidelink resource allocation apparatus in an unauthorized spectrum provided by still another embodiment of the present disclosure.

Referring to FIG. 16, the sidelink resource allocation apparatus 160 in the unauthorized spectrum includes a memory 1601, a transceiver 1602, a processor 1603, and a user interface 1604. The memory 1601 is configured to store computer programs; the transceiver 1602 is configured to transmit and receive data under control of the processor 1603; and the processor 1603 is configured to read the computer program in the memory 1601 and perform the following operations:
obtaining first indication information sent by a first device, where the first indication information includes resource allocation information, and the resource allocation information is correlated with an interlace included in a resource pool for a sidelink in the unauthorized spectrum; and performing sidelink communication in the resource pool according to the resource allocation information.

In FIG. 16, a bus architecture can include any number of interconnected buses and bridges; specifically, various circuits of one or more processors represented by the processor 1603 and memories represented by the memory 1601 are connected together. The bus architecture can also link various other circuits such as peripheral devices, voltage regulators, and power management circuits together, which are well-known in this field. Therefore, the above will not be elaborate in this article. A bus interface provides interfaces. The transceiver 1602 can be multiple components, including a transmitter and a receiver, providing a unit for communicating with various other devices over transmission medium, and the transmission medium includes, the transmission medium includes transmission medium such as wireless channels, wired channels, optical cables, and the like. For different user devices, the user interface 1604 can also be an interface that can connect external and internal devices, and the connected devices include but not limited to keyboards, displays, speakers, microphones, joysticks, and the like.

The processor 1603 is responsible for managing the bus architecture and usual processing, while the memory 1601 can store data used by the processor 1603 when performing operations.

Optionally, the processor 1603 can be a CPU (Central Processing Unit), an ASIC (Application Specific Integrated Circuit, Application Specific Integrated Circuit), an FPGA (Field Programmable Gate Array, Field Programmable Gate Array), or a CPLD (Complex Programmable Logic Device, Complex Programmable Logic Device), and the processor can also adopt a multicore architecture.

The processor is configured to execute any of the methods provided by the embodiments of the present disclosure according to obtained executable instructions by calling the computer program stored in the memory. The processor and memory can also be physically separated and arranged separately.

In some embodiments of the present disclosure, the resource pool includes at least one of the following: at least one interlace; at least one resource block set, each resource block set includes at least one interlace; at least one sub-channel, each sub-channel includes at least one interlace; at least one resource block set, each resource block set includes at least one sub-channel, and each sub-channel includes at least one interlace; or at least one sub-channel, each sub-channel includes at least one resource block set, and each resource block set includes at least one interlace.

In some embodiments of the present disclosure, in a case where the sub-channel includes multiple interlaces, index numbers of the multiple interlaces are consecutive; in a case where the resource block set includes multiple interlaces, index numbers of the multiple interlaces are consecutive; in a case where the second device occupies multiple sub-channels, index numbers of the multiple sub-channels are consecutive; in a case where the second device occupies multiple interlaces, index numbers of the multiple interlaces are consecutive.

In some embodiments of the present disclosure, a unit for sidelink resource allocation in the unauthorized spectrum is the interlace, and the second device occupies at least one interlace; or the unit for the sidelink resource allocation in the unauthorized spectrum is the sub-channel, and the second device occupies at least one sub-channel.

In some embodiments of the present disclosure, the second device occupies one interlace, and transmits data within all resource blocks of the occupied interlace.

In some embodiments of the present disclosure, the first indication information further includes at least one of the following: an index number of a resource block set; an index number of a sub-channel; or an index number of the interlace.

In some embodiments of the present disclosure, the index number of the resource block set includes at least one of the following: an index number of a starting resource block set; an index number of an ending resource block set; or the number of the resource block set.

In some embodiments of the present disclosure, the index number of the interlace includes at least one of the following: an index number of a starting interlace; an index number of an ending interlace; or the number of the interlace; where the interlace is globally numbered within the resource pool; and/or locally numbered within the resource block set, and/or locally numbered within the sub-channel.

In some embodiments of the present disclosure, in the case where the interlace is globally numbered within the resource pool, the index number of the interlace within the resource pool is unique; in the case where the interlace is locally numbered within the resource block set, the index number of the interlace within the resource block set is unique; and in the case where the interlace is locally numbered within the sub-channel, the index number of the interlace within the sub-channel is unique.

In some embodiments of the present disclosure, the processor 1603 is specifically configured to: receive a first message sent by the first device, where the first message includes the first indication information; where the first message includes at least one of the following: downlink control information DCI; sidelink control information SCI; media access control-control element MAC CE information; a radio resource control RRC message; or a pre-configured message.

In some embodiments of the present disclosure, the obtaining the first indication information sent by the first device includes at least one of the following: obtaining the first indication information sent by a network device, where the first indication information is determined by the network device, and the first device is the network device; or obtaining the first indication information sent by a terminal device, where the first indication information is determined by the network device or the terminal device, and the first device is the terminal device.

In some embodiments of the present disclosure, the processor 1603 is specifically configured to: determine the interlace allocated to the second device the first device is the network device according to the resource allocation information; and perform the sidelink communication based on the resource block of the allocated interlace.

In some embodiments of the present disclosure, the resource pool compliances with at least one of the following: each resource block set occupies 20 megahertz MHz bandwidth; there is a guard band between two adjacent resource block sets; each interlace includes at least 10 resource blocks; in a case where a subcarrier spacing SCS is 15 kHz, each resource block set includes 10 interlaces; in a case where the subcarrier spacing SCS is 30 kHz, each resource block set includes 5 interlaces; or the number of resource block sets included in each sub-channel is an integer.

It should be noted that the apparatus provided by the embodiment of the present disclosure as mentioned above can achieve all of method steps implemented in the method embodiment mentioned above, and can achieve the same technical effects. Therefore, specific descriptions of the same parts and beneficial effects as the method embodiment in this embodiment will not be elaborate here.

In order to implement the above embodiments, an embodiment of the present disclosure provides a processor readable storage medium, which stores a computer program, and the computer program is used to enable the processor to execute the sidelink resource allocation method in the unauthorized spectrum.

Those skilled in the art should understand that the embodiments of the present disclosure can be provided as methods, systems, or computer program products. Therefore, the present disclosure may take the form of a fully hardware implementation, a fully software implementation, or a combination of software and hardware implementation. Moreover, the present disclosure may take the form of the computer program product implemented on one or more computer usable storage mediums (including but not limited to the disk storage and optical storage) that containing computer usable program codes.

The present disclosure is described with reference to flowcharts and/or block diagrams of the method, device (system), and computer program product according to the embodiments of the present disclosure. It should be understood that each process and/or block in the flowchart and/or block diagram, as well as a combination of processes and/or blocks in the flowchart and/or block diagram, can be implemented by computer executable instructions. These computer executable instructions can be provided to the processor of a general-purpose computer, a specialized computer, an embedded processor, or other programmable data processing devices to generate a machine, enabling the instructions executed by the processor of the computer or other programmable data processing device to produce an apparatus for implementing functions specified in one or more processes in the flowchart and/or one or more boxes in the block diagram.

These processor-executable instructions can also be stored in a processor-readable memory that can guide a computer or other programmable data processing device to operate in a specific manner, such that the instructions stored in the processor-readable memory generate a manufactured product including instruction apparatus, and the instruction apparatus implements the functions specified in one or more processes in the flowchart, and/or one or more boxes in the block diagram.

These processor-executable instructions can also be loaded onto a computer or other programmable data processing device, enabling a series of operation steps to be performed on the computer or other programmable device to generate computer implemented processing. The instructions executed on the computer or other programmable device provide steps for implementing the functions specified in one or more processes in the flowchart and/or one or more boxes in the block diagram.

Obviously, those skilled in the art can make various modifications and variations to the present disclosure without departing from spirit and scope of the present disclosure. In this way, if these modifications and variations for the present disclosure fall within the scope of the claims and their equivalent technologies, then the present disclosure is also intended to include these modifications and variations.

It should be noted that in the description of the present disclosure, terms "first", "second", and the like are only used for descriptive purposes and cannot be understood as indicating or implying relative importance. In addition, in the description disclosed herein, unless otherwise specified, the meaning of "multiple" refers to two or more.

Any process or method description in a flowchart or otherwise described herein can be understood as representing a module, fragment, or portion of one or more executable instructions for implementing a specific logic function or steps of a procedure, and a scope of preferred embodiments disclosed herein includes alternative implementations, which may not be in the order shown or discussed, but may be performed in a substantially simultaneous manner or in reverse order based on the functions involved, so as to execute the functions, which should be understood by those skilled in the art to which the embodiments of the present disclosure belong.

It should be understood that various parts of the present disclosure can be implemented using hardware, software, firmware, or a combination thereof. In the above embodiments, multiple steps or methods can be implemented using software or firmware stored in a memory and executed by a suitable instruction execution system. For example, if implemented in hardware, as in another implementation, which can be implemented by using any one or a combination of the following techniques known in the art: discrete logic circuits with logic gate circuits for implementing logic functions on data signals, application specific integrated circuits with suitable combinational logic gate circuits, programmable gate arrays (PGAs), field programmable gate arrays (FPGAs), and the like.

Ordinary skilled in the art can understand that all or part of the steps carried by the methods in the above embodiments can be completed by instructing relevant hardware through a program. The program can be stored in a computer-readable storage medium, and when executed, one or a combination of steps of the method embodiment can be implemented.

In addition, the various functional units in the disclosed embodiments can be integrated into one processing module, or they can exist separately physically, or two or more units can be integrated into one module. The integrated modules mentioned above can be implemented in the form of hardware or software functional modules. If the integrated modules are implemented in the form of software functional modules and sold or used as stand-alone products, they can also be stored in a computer-readable storage medium.

The storage medium mentioned above can be a read-only memory, a magnetic disk, an optical disk, and the like.

In description of the specification, the description of reference terms "one embodiment", "some embodiments", "examples", "specific examples", or "some examples" refers to that specific features, structures, materials, or characteristics described in conjunction with the embodiment or example are included in at least one embodiment or example of the present disclosure. In this specification, illustrative expressions of the above terms may not necessarily refer to the same embodiments or examples. Moreover, the specific features, structures, materials, or characteristics described can be combined in any one or more embodiments or examples in a suitable manner.

Although the embodiments of the present disclosure have been shown and described above, it can be understood that the above embodiments are exemplary and should not be construed as limiting the present disclosure. Those of ordinary skill in the art may make changes, modifications, substitutions, and variations to the above embodiments within a scope of the present disclosure.

## Claims

1. A sidelink resource allocation method in an unauthorized spectrum, executed by a first device, and comprising:
sending first indication information to a second device, wherein the first indication information comprises resource allocation information, and the resource allocation information is correlated with an interlace comprised in a resource pool for a sidelink in the unauthorized spectrum.

2. The method according to claim 1, wherein the resource pool comprises at least one of the following:
at least one interlace;
at least one resource block set, each resource block set comprises at least one interlace;
at least one sub-channel, each sub-channel comprises at least one interlace;
at least one resource block set, each resource block set comprises at least one sub-channel, and each sub-channel comprises at least one interlace; or
at least one sub-channel, each sub-channel comprises at least one resource block set, and each resource block set comprises at least one interlace.

3. The method according to claim 2, wherein in a case where the sub-channel comprises multiple interlaces, index numbers of the multiple interlaces are consecutive;
in a case where the resource block set comprises multiple interlaces, index numbers of the multiple interlaces are consecutive;
in a case where the first device occupies multiple sub-channels, index numbers of the multiple sub-channels are consecutive;
in a case where the first device occupies multiple interlaces, index numbers of the multiple interlaces are consecutive.

4. The method according to claim 2 or 3, wherein a unit for sidelink resource allocation in the unauthorized spectrum is the interlace, and the first device occupies at least one interlace; or
the unit for the sidelink resource allocation in the unauthorized spectrum is the sub-channel, and the first device occupies at least one sub-channel.

5. The method according to claim 2, wherein the first device occupies one interlace, and transmits data within all resource blocks of the occupied interlace.

6. The method according to any one of claims 1 to 5, wherein the first indication information further comprises at least one of the following:
an index number of a resource block set;
an index number of a sub-channel; or
an index number of the interlace.

7. The method according to claim 6, wherein the index number of the resource block set comprises at least one of the following:
an index number of a starting resource block set;
an index number of an ending resource block set; or
the number of the resource block set.

8. The method according to claim 6, wherein the index number of the interlace comprises at least one of the following:
an index number of a starting interlace;
an index number of an ending interlace; or
the number of the interlace;
wherein the interlace is globally numbered within the resource pool; and/or locally numbered within the resource block set, and/or locally numbered within the sub-channel.

9. The method according to claim 8, wherein in the case where the interlace is globally numbered within the resource pool, the index number of the interlace within the resource pool is unique;
in the case where the interlace is locally numbered within the resource block set, the index number of the interlace within the resource block set is unique; and
in the case where the interlace is locally numbered within the sub-channel, the index number of the interlace within the sub-channel is unique.

10. The method according to any one of claims 1 to 9, wherein the first indication information comprises: an index number of the interlace, wherein the index number of the interlace is used to determine the interlace allocated to the second device;
wherein the resource pool comprises multiple interlaces;
the second device occupies one interlace; or
the second device occupies multiple interlaces, wherein the index numbers of the multiple interlaces are consecutive;
a unit for sidelink resource allocation in the unauthorized spectrum is the interlace.

11. The method according to any one of claims 1 to 9, wherein the first indication information comprises: an index number of a resource block set and an index number of the interlace, wherein the index number of the resource block set and the index number of the interlace are used to determine the interlace allocated to the second device;
wherein the resource pool comprises at least one resource block set, each resource block set comprises multiple interlaces;
the second device occupies one interlace; or
the second device occupies multiple interlaces, wherein the index numbers of the multiple interlaces are consecutive;
a unit for sidelink resource allocation in the unauthorized spectrum is the interlace.

12. The method according to any one of claims 1 to 9, wherein the first indication information comprises: an index number of the interlace and an index number of a sub-channel, wherein the index number of the interlace and the index number of the sub-channel are used to determine the interlace allocated to the second device;
wherein the resource pool comprises at least one sub-channel, and each sub-channel comprises at least one interlace;
the second device occupies one interlace or sub-channel; or
the second device occupies multiple interlaces or multiple sub-channels, wherein the index numbers of the multiple interlaces are consecutive, or the index numbers of the multiple sub-channels are consecutive;
a unit for sidelink resource allocation in the unauthorized spectrum is the interlace or the sub-channel.

13. The method according to any one of claims 1 to 9, wherein the first indication information comprises: an index number of a resource block set, an index number of the interlace and an index number of a sub-channel, wherein the index number of the resource block set, the index number of the interlace and the index number of the sub-channel are used to determine the interlace allocated to the second device;
wherein the resource pool comprises at least one resource block set, each resource block set comprises at least one sub-channel, each sub-channel comprises at least one interlace; or the resource pool comprises at least one sub-channel, each sub-channel comprises at least one resource block set, each resource block set comprises multiple interlace;
the second device occupies one interlace or sub-channel; or
the second device occupies multiple interlaces or multiple sub-channels, wherein the index numbers of the multiple interlaces are consecutive, or the index numbers of the multiple sub-channels are consecutive;
a unit for sidelink resource allocation in the unauthorized spectrum is the interlace or the sub-channel.

14. The method according to any one of claims 1 to 13, wherein the sending the first indication information to the second device comprises:
sending a first message to the second device, wherein the first message comprises the first indication information; wherein the first message comprises at least one of the following:
downlink control information DCI;
sidelink control information SCI;
media access control-control element MAC CE information;
a radio resource control RRC message; or
a pre-configured message.

15. The method according to any one of claims 1 to 14, wherein the resource pool compliances with at least one of the following:
each resource block set occupies 20 megahertz MHz bandwidth;
there is a guard band between two adjacent resource block sets;
each interlace comprises at least 10 resource blocks;
in a case where a subcarrier spacing SCS is 15 kHz, each resource block set comprises 10 interlaces;
in a case where the subcarrier spacing SCS is 30 kHz, each resource block set comprises 5 interlaces; or
the number of resource block sets comprised in each sub-channel is an integer.

16. A sidelink resource allocation method in an unauthorized spectrum, executed by a second device, and comprising:
obtaining first indication information sent by a first device, wherein the first indication information comprises resource allocation information, and the resource allocation information is correlated with an interlace comprised in a resource pool for a sidelink in the unauthorized spectrum; and
performing sidelink communication in the resource pool according to the resource allocation information.

17. The method according to claim 16, wherein the resource pool comprises at least one of the following:
at least one interlace;
at least one resource block set, each resource block set comprises at least one interlace;
at least one sub-channel, each sub-channel comprises at least one interlace;
at least one resource block set, each resource block set comprises at least one sub-channel, and each sub-channel comprises at least one interlace; or
at least one sub-channel, each sub-channel comprises at least one resource block set, and each resource block set comprises at least one interlace.

18. The method according to claim 17, wherein in a case where the sub-channel comprises multiple interlaces, index numbers of the multiple interlaces are consecutive;
in a case where the resource block set comprises multiple interlaces, index numbers of the multiple interlaces are consecutive;
in a case where the second device occupies multiple sub-channels, index numbers of the multiple sub-channels are consecutive;
in a case where the second device occupies multiple interlaces, index numbers of the multiple interlaces are consecutive.

19. The method according to claim 17 or 18, wherein a unit for sidelink resource allocation in the unauthorized spectrum is the interlace, and the second device occupies at least one interlace; or
the unit for the sidelink resource allocation in the unauthorized spectrum is the sub-channel, and the second device occupies at least one sub-channel.

20. The method according to claim 17, wherein the second device occupies one interlace, and transmits data within all resource blocks of the occupied interlace.

21. The method according to any one of claims 16 to 20, wherein the first indication information further comprises at least one of the following:
an index number of a resource block set;
an index number of a sub-channel; or
an index number of the interlace.

22. The method according to claim 21, wherein the index number of the resource block set comprises at least one of the following:
an index number of a starting resource block set;
an index number of an ending resource block set; or
the number of the resource block set.

23. The method according to claim 21, wherein the index number of the interlace comprises at least one of the following:
an index number of a starting interlace;
an index number of an ending interlace; or
the number of the interlace;
wherein the interlace is globally numbered within the resource pool; and/or locally numbered within the resource block set, and/or locally numbered within the sub-channel.

24. The method according to claim 23, wherein in the case where the interlace is globally numbered within the resource pool, the index number of the interlace within the resource pool is unique;
in the case where the interlace is locally numbered within the resource block set, the index number of the interlace within the resource block set is unique; and
in the case where the interlace is locally numbered within the sub-channel, the index number of the interlace within the sub-channel is unique.

25. The method according to any one of claims 16 to 24, wherein the obtaining the first indication information sent by the first device comprises:
receiving a first message sent by the first device, wherein the first message comprises the first indication information; wherein the first message comprises at least one of the following:
downlink control information DCI;
sidelink control information SCI;
media access control-control element MAC CE information;
a radio resource control RRC message; or
a pre-configured message.

26. The method according to any one of claims 16 to 25, wherein the obtaining the first indication information sent by the first device comprises at least one of the following:
obtaining the first indication information sent by a network device, wherein the first indication information is determined by the network device, and the first device is the network device; or
obtaining the first indication information sent by a terminal device, wherein the first indication information is determined by the network device or the terminal device, and the first device is the terminal device.

27. The method according to any one of claims 16 to 26, wherein the performing the sidelink communication in the resource pool according to the resource allocation information comprises:
determining the interlace allocated to the second device according to the resource allocation information; and
performing the sidelink communication based on the resource block of the allocated interlace.

28. The method according to any one of claims 16 to 27, wherein the resource pool compliances with at least one of the following:
each resource block set occupies 20 megahertz MHz bandwidth;
there is a guard band between two adjacent resource block sets;
each interlace comprises at least 10 resource blocks;
in a case where a subcarrier spacing SCS is 15 kHz, each resource block set comprises 10 interlaces;
in a case where the subcarrier spacing SCS is 30 kHz, each resource block set comprises 5 interlaces; or
the number of resource block sets comprised in each sub-channel is an integer.

29. A sidelink resource allocation apparatus in an unauthorized spectrum, comprising:
a sending unit, configured to send first indication information to a second device, wherein the first indication information comprises resource allocation information, and the resource allocation information is correlated with an interlace comprised in a resource pool for a sidelink in the unauthorized spectrum.

30. A sidelink resource allocation apparatus in an unauthorized spectrum, comprising:
an obtaining unit, configured to obtain first indication information sent by a first device, wherein the first indication information comprises resource allocation information, and the resource allocation information is correlated with an interlace comprised in a resource pool for a sidelink in the unauthorized spectrum; and
a processing unit, configured to perform sidelink communication in the resource pool according to the resource allocation information.

31. A sidelink resource allocation apparatus in an unauthorized spectrum, comprising a memory, a transceiver and a processor: the memory is configured to store computer programs; the transceiver is configured to transmit and receive data under control of the processor; the processor is configured to read the computer programs in the memory and perform the following operations:
sending first indication information to a second device, wherein the first indication information comprises resource allocation information, and the resource allocation information is correlated with an interlace comprised in a resource pool for a sidelink in the unauthorized spectrum.

32. A sidelink resource allocation apparatus in an unauthorized spectrum, comprising a memory, a transceiver and a processor: the memory is configured to store computer programs; the transceiver is configured to transmit and receive data under control of the processor; the processor is configured to read the computer programs in the memory and perform the following operations:
obtaining first indication information sent by a first device, wherein the first indication information comprises resource allocation information, and the resource allocation information is correlated with an interlace comprised in a resource pool for a sidelink in the unauthorized spectrum; and
performing sidelink communication in the resource pool according to the resource allocation information.

33. A processor readable storage medium, wherein the processor readable storage medium stores a computer program, and the computer program is used to enable the processor to execute the sidelink resource allocation method in the unauthorized spectrum according to any one of claims 1 to 15, or to execute the sidelink resource allocation method in the unauthorized spectrum according to any one of claims 16 to 28.

34. A computer program product, comprising a computer program, wherein the computer program, when executed by a processor, implements the sidelink resource allocation method in the unauthorized spectrum according to any one of claims 1 to 15, or implements the sidelink resource allocation method in the unauthorized spectrum according to any one of claims 16 to 28.
